**Europäisches Patentamt**

(19) **European Patent Office**

**Office européen des brevets**

(11) Publication number : **0 428 716 B1**

(12) # EUROPEAN PATENT SPECIFICATION

(45) Date of publication of patent specification : **30.08.95 Bulletin 95/35**

(51) Int. Cl.⁶ : **G06F 15/80, G06G 7/60**

(21) Application number : **90910197.4**

(22) Date of filing : **14.06.90**

(86) International application number : **PCT/US90/03436**

(87) International publication number : **WO 90/16039 27.12.90 Gazette 90/29**

(54) **NEURAL NET USING DIFFERENTIAL CAPACITIVELY COUPLED INPUT AND OUTPUT LINES.**

(30) Priority : **15.06.89 US 366838**
**15.06.89 US 366839**

(43) Date of publication of application : **29.05.91 Bulletin 91/22**

(45) Publication of the grant of the patent : **30.08.95 Bulletin 95/35**

(84) Designated Contracting States : **DE FR GB IT NL**

(56) References cited :
Electronics Letters, Vol. 23, No. 24, 19 November 1987, (Stevenage, Herts.,GB), Y. TSIVIDIS et al.: "Analogue Circuits for Variable-Synapse Electronic Neural Networks", pages 1313-1314
Electronics, Vol. 45, No. 4, 14 February 1972, R.G. KOSTANTY: "Doubling op amp summing Power", pages 73-75 see figure 4; page 75, paragraph: "AC considerations"

(56) References cited :
Proceedings Neural Networks from Models to Applications, ESPCI, Paris, 1988, H.P. GRAF et al.: "VLSI Neural Network for Fast Pattern Matching", pages 725-732
International Journal of Electronics, Vol. 64, No. 3, March 1988, (London, GB), A. CICHOCKI et al.: "Switched-Capacitor Function Generators", pages 359-375
Wescon 88, Conference Record, Vol. 32, November 1988, (North Hollywood, CA, US), P. HASLER: "Implementing Practical Neural Networks in Silicon", pages SS/1/1-6

(73) Proprietor : **GENERAL ELECTRIC COMPANY**
**1 River Road**
**Schenectady, NY 12345 (US)**

(72) Inventor : **ENGELER, William, Ernest**
**88 Saint Stephens Lane West**
**Scotia, NY 12302 (US)**

(74) Representative : **Pratt, Richard Wilson et al**
**London Patent Operation**
**G.E. Technical Services Co. Inc.**
**Essex House**
**12/13 Essex Street**
**London WC2R 3AA (GB)**

## Description

The invention relates to computer structures that emulate portions of a brain in operation, and more particularly, to such computer structures as can be realized using complementary metal-oxide-semiconductor (CMOS) technology.

## BACKGROUND OF THE INVENTION

Computers of the von Neumann type architecture have limited computational speed owing to the communication limitations of the single processor. These limitations may be overcome if a plurality of processors are utilized in the calculation and are operated at least partly in parallel. This alternative architecture, however, generally leads to difficulties associated with programming complexity. Therefore, it is often not a good solution. Recently, an entirely different alternative that does not require programming has shown promise. The networking ability of the neurons in the brain has served as a model for the formation of a highly interconnected set of processors, called a "neural network" or "neural net" that can provide computational and reasoning functions without the need of formal programming. The neural nets can learn the correct procedure by experience rather than being preprogrammed for performing the correct procedure. The reader is referred to R.P. Lippmann's article "An Introduction to Computing With Neural Nets" appearing on pages 4-21 of the April 1987 IEEE ASSP MAGAZINE (0740-7467/87/0400-0004/$10.00 " 1987 IEEE), incorporated herein by reference, for background about the state of the art in regard to neural nets.

Neural nets are composed of a plurality of neuron models, processors each exhibiting "axon" output signal response to a plurality of "synapse" input signals. In a type of neural net called a "perceptron", each of these processors calculates the weighted sum of its "synapse" input signals, which are respectively weighted by respective weighting values that may be positive- or negative-valued, and responds non-linearly to the weighted sum to generate the "axon" output response. This relationship may be described in mathematical symbols as follows.

$$v_j = f\left(\sum_{i=1}^{M} W_{i,j} X_i\right) \qquad j = 1, 2, \ldots N \qquad (1)$$

Here, i indexes the input signals of the perceptron, of which there are an integral number M, and j indexes its output signals, of which there are an integral number N. $W_{i,j}$ is the weighting of the $i^{th}$ input signal as makes up the $j^{th}$ output signal at such low input signal levels that the function

$$f\left(\sum_{i=1}^{M} W_{i,j} X_i\right)$$

is approximately linear. At higher absolute values of its argument, the function

$$f\left(\sum_{i=1}^{M} W_{i,j} X_i\right)$$

no longer exhibits linearity but rather exhibits a reduced response to

$$\sum_{i=1}^{M} W_{i,j} X_i.$$

A more complex artificial neural network arranges a plurality of perceptrons in hierarchic layers, the output signals of each earlier layer providing input signals for the next succeeding layer. Those layers preceding the output layer providing the ultimate output signal(s) are called "hidden" layers.

The processing just described normally involves sampled-data analog signals, and prior-art neural nets

EP 0 428 716 B1

have employed operational amplifiers with resistive interconnecting elements for the weighting and summing procedures. The resistive elements implement weighted summation being done in accordance with Ohm's Law. The speed of such a processor is limited by capacitances in various portions of the processor, and computations have been slow if the power consumption of a reasonably large neural net is to be held within reasonable bounds. That is, speed is increased by reducing resistance values to reduce RC time constants in the processors, but the reduced resistance values increase the $V^2/R$ power consumption (R, C and V being resistance, capacitance and voltage, respectively.) Using capacitors to perform weighted summation in accordance with Coulomb's Law provide neural nets of given size operating at given speed that consume less power than those the processors which use resistors to implement weighted summation in accordance with Ohm's Law.

Y.P. Tsividis and D. Anastassion in a letter "Switched-Capacitor Neural Networks" appearing in ELECTRONICS LETTERS, 27th August 1987, Vol. 23, No. 18, pages 958,959 (IEE) describe one method of implementing weighted summation in accordance with Coulomb's Law. Their method, a switched capacitor method, is useful in analog sampled-data neural net systems. However, a method of implementing weighted summation in accordance with Coulomb's Law that does not rely on capacitances being switched is highly desirable, it is here pointed out. This avoids the complexity of the capacitor switching elements and associated control lines. Furthermore, operation of the neural net with continuous analog signals over sustained periods of time, as well as with sampled data analog signals, is thus made possible.

A problem that is encountered when one attempts to use capacitors to perform weighted summation in a neural net layer is associated with the stray capacitance between input and output lines, which tends to be of appreciable size in neural net layers constructed using a metal-oxide-semiconductor (MOS) integrated circuit technology. The input and output lines are usually laid out as overlapping column and row busses using plural-layer metallization. The column busses are situated in one layer of metallization and the row busses are situated in another layer of metallization separated from the other layer by an intervening insulating oxide layer. This oxide layer is thin, so there is appreciable capacitance at each crossing of one bus over another. The fact of the row and column busses being in different planes tends to increase stray capacitances between them. The stray capacitance problem is also noted where both row and column busses are situated in the same metallization layer with one set of busses being periodically interrupted in their self-connections to allow passage of the other set of busses and being provided with cross-over connections to complete their self-connections. The problem of stray capacitance is compounded by the fact that the capacitive elements used to provide weights in a capacitive voltage summation network have stray capacitances to the substrate of the monolithic integrated circuit in which they are incorporated; a perfect two-terminal capacitance is not actually available in the monolithic integrated circuit. Where capacitive elements having programmable capacitances are used, capacitance is usually not programmable to zero value, either.

The problems of stray capacitance are solved in some embodiments of the invention the invention by using output line pairs and sensing the charge conditions on the output lines of each pair differentially so that the effects of stray capacitances tend to cancel each other out. These output line pairs facilitate both excitory and inhibitory weights -- that is, both positive- and negative-polarity $W_{i,j}$ -- in effect to be achieved without having to resort to capacitor switching to achieve negative capacitance.

The foregoing problems with stray capacitance are solved in other embodiments of the invention by using balanced input line pairs, so that the effects of stray capacitance from each output line tend to cancel out each other. Driving paired input lines with balanced input signals also allows both excitory and inhibitory weights -- that is, both positive- and negative-polarity $W_{i,j}$ -- in effect to be achieved without having to resort to capacitor switching in order to achieve negative capacitance. The $W_{i,j} x_i$ terms are obtained by summing weighted $x_i$ and $- x_i$ balanced input signals.

Neural nets employing capacitors in accordance with the invention lend themselves to being used in performing parts of the computations needed to implement a back-propagation training algorithm. The back-propagation training algorithm is an iterative gradient algorithm designed to minimize the mean square error between the actual output of a multi-layer feed-forward neural net and the desired output. It requires continuous, differentiable non-linearities. A recursive algorithm starting at the output nodes and working back to the first hidden layer is used iteratively to adjust weights in accordance with the following formula.

$$W_{i,j} (t + 1) = W_{i,j}(t) - \eta \delta_j x_i \quad (2)$$

In this equation $W_{i,j}(t)$ is the weight from hidden node i (or, in the case of the first hidden layer, from an input node) to node j at time t; $x_i$ is either the output of node i (or, in the case of the first hidden layer, is an input signal); $\eta$ is a gain term introduced to maintain stability in the feedback procedure used to minimize the mean square errors between the actual output(s) of the perceptron and its desired output(s); and $\delta_j$ is a derivative of error. The general definition of $\delta_j$ is the change in error energy from output node j of a neural net layer with a change in the weighted summation of the input signals used to supply that output node j.

Lippman presumes that a particular sigmoid logistic non-linearity is used. Presuming the non-linearity of

3

processor response is to be defined not as restrictively as Lippmann does, then $\delta_j$ can be more particularly defined as in equation (3), following, if node j is an output node, or as in equation (4), following, if node j is an internal hidden node.

$$\delta_j = y_j' (d_j - y_j) \quad (3)$$

$$\delta_j = y_j' \sum_k \delta_k w_{j,k} \qquad (4)$$

In equation (3) $d_j$ and $y_j$ are the desired and actual values of output response from the output layer and $y_j'$ is differential response of $y_j$ to the non-linearity in the output layer - i.e., the slope of the transfer function of that non-linearity. In equation (4) k is over all nodes in the neural net layer succeeding the hidden node j under consideration and $W_{j,k}$ is the weight between node j and each such node k. The term $y_j'$ is defined in the same way as in equation (3).

The general definition of the $y_j'$ term appearing in equations (3) and (4), rather than that general term being replaced by the specific value of $y_j'$ associated with a sigmoid logistic non-linearity, is the primary difference between the training algorithm as described here and as described by Lippmann. Also, Lippmann defines $\delta_j$ in opposite polarity from equations (1), (3) and (4) above.

During training of the neural net, prescribed patterns of input signals are sequentially repetitively applied, for which patterns of input signals there are corresponding prescribed patterns of output signals known. The pattern of output signals generated by the neural net, responsive to each prescribed pattern of input signals, is compared to the prescribed pattern of output signals to develop error signals, which are used to adjust the weights per equation (2) as the pattern of input signals is repeated several times, or until the error signals are detected as being negibly valued. Then training is done with the next set of patterns in the sequence. During extensive training the sequence of patterns may be recycled.

Document "Doubling op amp summing power", pages 73-75, Electronics, vol. 45, no.4, 14 February 1972, discloses scaling signals using resistive potential dividers in the feedback connections of operational amplifiers; capacitors are DC blocking capacitors and do not determine scaling weights or signals. Rather the resistors do ; the relatively high impedances of resistors at frequencies of interest as compared to the DC blocking capacitors cause input signal voltages to be impressed primarily across the resistors, rather than the capacitors, so the capacitors do not affect the weighted summation results.

SUMMARY OF THE INVENTION

The problem of stray capacitance and the problem of providing for both negative and positive weights without using switched capacitors are solved in the invention by using two sets of weighting capacitors, rather than one set of weighting capacitors, in each neuron model.

In one embodiment of the invention each processor includes a plurality, M in number, of input lines for receiving respective ones of M input voltage signals. Each processor has first and second output lines. Respective capacitive elements connect each input signal line to each of the first and second output lines. Means are provided for maintaining substantially equal capacitances from the output lines to their respective surroundings. A differential-input non-linear amplifier has inverting and non-inverting input ports to which the first and second output lines connect and has an output port for supplying neuron-like response to the M input signal voltages. Sensing the charge conditions on the output lines of each pair differentially tends to make the effects of stray capacitances cancel each other out. These output line pairs facilitate both excitory and inhibitory weights -- that is, both positive- and negative-polarity $W_{i,j}$ -- in effect to be achieved without having to resort to capacitor switching to achieve negative capacitance.

In another embodiment of the invention each processor includes an output line on which the weighted summation of input signal voltages appears and a non-linear amplifier for providing neuron-like response to that weighted summation. A plurality, 2M in number, of input lines, crossing by that output line and exhibiting a stray capacitance thereto, are each connected to that output line by a respective capacitive element. Each input line and the capacitive element connecting it to the output line are identified by a respective one of consecutive ordinal numbers first through $2M^{th}$, M being a positive integer. Means are provided for applying M input signal voltages in balanced form each to a respective pair of input lines identified by ordinal numbers M apart. The differences in the capacitances of the capacitive elements connecting to the output line from each pair of input lines determines the weighting of the input signal applied in balanced form on that pair of input lines, as appears in the weighted summation of input signal on the outline line. Accordingly, the effects of stray capacitance on the weighted summation of input signals is reduced.

## BRIEF DESCRIPTION OF THE DRAWING

FIGURE 1 is a schematic diagram of a neural net layer which embodies the invention, using capacitors to perform weighted summations of synapse signals to be subsequently linearly combined and non-linearly amplified to generate axon response signals.

FIGURE 2 is a schematic diagram of a prior art fully differential amplifier and a bias network therefor, as implemented with complementary metal-oxide-semiconductor CMOS field effect transistors, which is useful in the construction of neural nets in accordance with the invention.

FIGURE 3 is a schematic diagram of a non-linear voltage amplifier that is useful in the construction of neural nets in accordance with the invention.

FIGURES 4A and 4B together form a FIGURE 4 that is a schematic diagram of a modification of the FIGURE 1 neural net that can be made manifold times to provide in accordance with a further aspect of the invention, for the programmable weighting of the capacitances used in performing weighted summation of synapse signals.

FIGURE 5 is a schematic diagram illustrating one way of pulsing the non-linear output driver amplifiers in a FIGURE 1 neural net layer modified manifoldly per FIGURE 4.

FIGURE 6 is a schematic diagram of a prior-art analog multiplier modified to provide balanced output signals, which is useful in the FIGURE 1 neural net modifications shown in FIGURE 4 and in FIGURE 9.

FIGURE 7 is a schematic diagram of training apparatus used with the FIGURE 1 neural net layer manifoldly modified per FIGURE 4 (or with the FIGURE 13 neural net layer modified manifold times per FIGURE 14).

FIGURE 8 is a schematic diagram of a system having a plurality of neural net layers each constructed in accordance with FIGURE 1 modified manifold times per FIGURE 4 (or in accordance with FIGURE 13 modified manifold times per FIGURE 14).

FIGURES 9A and 9B together form a FIGURE 9 tnat is a schematic diagram of an alternative modification of the FIGURE 1 neural net that can be made manifold times to provide during training for the programmable weighting of the capacitances used in performing weighted summation of synapse signals, in accordance with another aspect of the invention.

FIGURE 10 is a schematic diagram of the arrangement of stages in each counter of the FIGURE 1 neural net modified per FIGURE 9.

FIGURE 11 is a schematic diagram of the logic elements included in each counter stage.

FIGURES 12A, 12B and 12C together form a FIGURE 12 that is a schematic diagram of further modifications to the neural net, which use pairs of input lines driven by balanced input signals for connection to the pairs of differentially sensed output lines by weighting capacitors connected in bridge configurations.

FIGURE 13 is a schematic diagram of another neural net layer which embodies the invention, using capacitors to perform weighted summations of synapse signals to be subsequently non-linearly amplified to generate axon response signals.

FIGURES 14A and 14B together form a FIGURE 14 that is a schematic diagram of a modification of the FIGURE 13 neural net that can be made manifold times to provide, in accordance with a further aspect of the invention, for the programmable weighting of the capacitances used in performing weighted summation of synapse signals.

FIGURE 15 is a schematic diagram illustrating apparatus which can be used instead of the FIGURE 5 apparatus for pulsing the non-linear output driver amplifiers in a FIGURE 13 neural net layer modified manifoldly per FIGURE 14.

FIGURES 16A and 16B together form a FIGURE 16 that is a schematic diagram of an alternative modification of the FIGURE 1 neural net that can be made manifold times to provide during training for the programmable weighting of the capacitances used in performing weighted summation of synapse signals, in accordance with another aspect of the invention.

## DETAILED DESCRIPTION

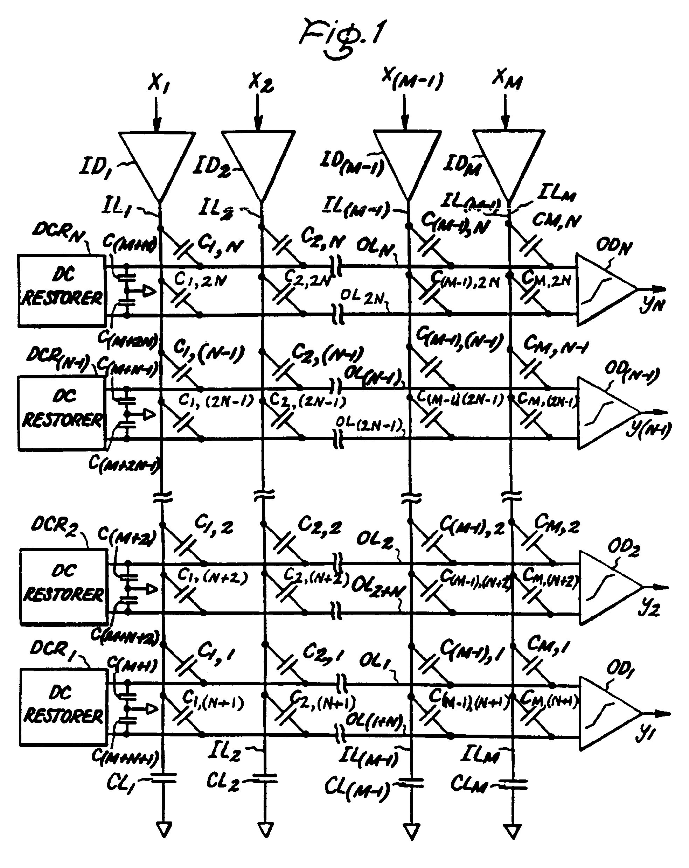

FIGURE 1 shows a neural net comprising a plurality, N in number, of non-linear amplifiers $OD_1$, $OD_2$, .. $OD_{(N-1)}$, ODN. Each of a plurality, M in number, of input voltage signals $x_1$, $x_2$, ...$x_{(M,1)}$, $x_M$ supplied as "synapse" signals is weighted to provide respective input voltages for the nonlinear voltage amplifiers $OD_1$, $OD_2$, ...$OD_{(N-1)}$, $OD_N$, which generate respective "axon" responses $Y_1$, $Y_2$, ...$Y_{(N-1)}$, $Y_N$.

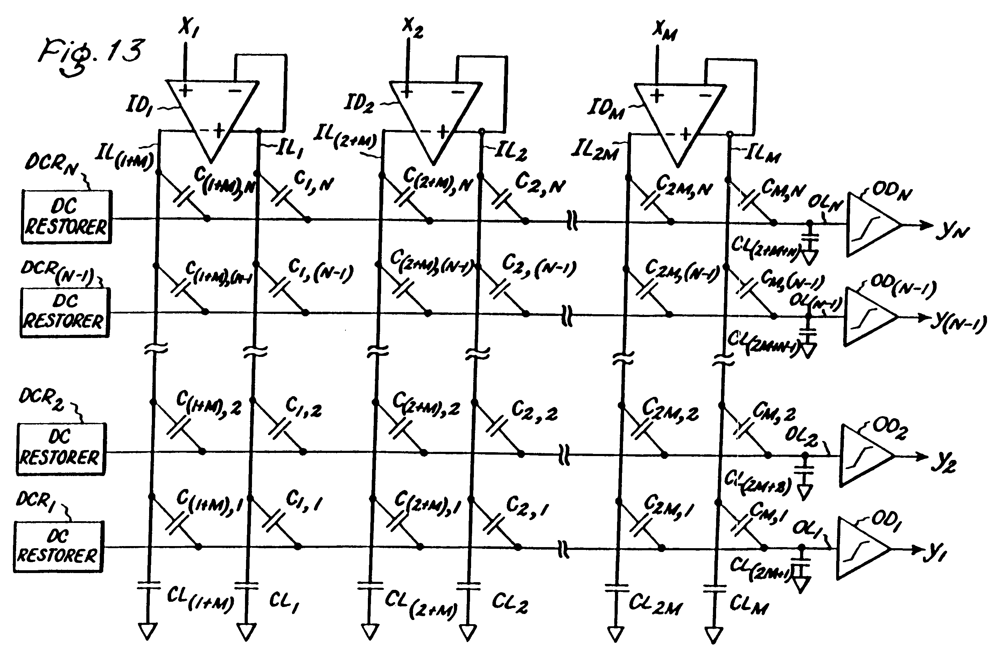

M is a positive plural integer indicating the number of input synapse signals to the FIGURE 1 (or FIGURE 13) net, and N is a positive plural integer indicating the number of output axon signals the net can generate. To reduce the written material required to describe operation of the FIGURE 1 (or FIGURE 13) neural net, operations using replicated elements will be described in general terms; using a subscript i ranging over all values one through M for describing operations and apparatuses as they relate to the (column) input signals $x_1$, $x_2$, ...$x_{(M-1)}$, $x_M$; and using a subscript j ranging over all values one through N for describing operations and apparatus as they relate to the (row) output signals $Y_1$, $Y_2$, ...$Y_{(N-1)}$, $Y_N$. That is, i and j are the column and row numbers used to describe particular portions of the neural net.

In FIGURE 1 input voltage signal $x_i$ is applied to the input port of an input driver amplifier $ID_i$ that is a voltage amplifier which in turn applies its voltage response to an input line $IL_i$. Respective output lines $OL_j$ and $OL_{(j+N)}$ connect to the non-inverting input port of output driver amplifier $OD_j$ and to its inverting input port. Output driver amplifier $OD_j$ generates at its output port a non-linear voltage response to the cumulative difference in charge on that respective pair of output lines $OL_j$ and $OL_{(j+N)}$.

The non-linear output driver amplifier $OD_j$ is shown in FIGURE 1 as simply being a differential-input non-linear voltage amplifier with the quiescent direct potential applied to its (+) and (-) input signal terminals via output lines $OL_j$ and $OL_{(j+N)}$ being adjusted by clamping to a desired bias voltage at selected times using a respective direct-current restorer circuit $DCR_j$. The total capacitance of output line $OL_j$ to its surroundings and the total capacitance of output line $OL_{(j+N)}$ to its surroundings are caused to be substantially the same, as will be more particularly described below. A respective capacitor $C_{i,j}$ connects each of the input lines $IL_i$ to each of the output lines $OL_j$, and a respective capacitor $C_{i,(j+N)}$ connects each of the input lines $IL_i$ to each of the output lines $OL_{(j+N)}$. Since at its output terminal the output driver amplifier $OD_j$ responds without inversion to $x_i$ input signal voltage applied to its non-inverting (+) input terminal via capacitor $C_{i,j}$ and responds with inversion to $x_i$ input signal voltage applied to its inverting (-) input terminal via capacitor $C_{i,(j+N)}$, respectively, the electrically equivalent circuit is $x_i$ signal voltage being applied to a single output line $OL_j$ by a capacitor having a capacitance that equals the capacitance of $C_{i,j}$ minus the capacitance of $C_{i,(i+N)}$. This technique of single-ended output signal drive to paired output lines that are differentially sensed avoids the need for switched-capacitance techniques in order to obtain inhibitory (or negative) weights as well as excitory (or positive) weights. Thus this technique facilitates operating the neural net with analog signals that are continuous over sustained periods of time, if so desired.

FIGURE 1 shows each of the input lines $IL_i$ as being provided with a respective load capacitor $CL_i$ to cause that capacitive loading upon the output port of the input driver amplifier $ID_i$ to be substantially the same as that upon each output port of the other input driver amplifiers. This is desirable for avoiding unwanted differential delay in responses to the input signals $x_i$. Substantially equal capacitive loading can be achieved by making the capacitance of each of the input line loading capacitors $CL_1$ - $CL_M$ very large compared to the total capacitance of the capacitors $C_{i,j}$ connecting thereto. Preferably, however, this result is achieved by making the capacitance of each of the input line loading capacitors complement the combined value of the other capacitances connecting thereto. This procedure reduces the amount of line loading capacitance required. Where the voltages appearing on the output lines $OL_j$ and $OL_{(j+N)}$ are sensed directly by the non-linear output driver amplifiers $OD_1$, ...$OD_N$, as shown in FIGURE 1, this procedure makes the voltage division ratio for each input voltage $x_i$, ... $x_m$ independent of the voltage division ratios for the other input voltages.

FIGURE 1 also shows each of the output lines $OL_j$ being loaded with a respective load capacitor $CL_{(M+j)}$ and each of the output lines $OL_{(N+j)}$ being loaded with a respective load capacitor $CL_{(M+N+j)}$. This is done so that the total capacitance on each output line remains substantially the same as on each of the other output lines. This can be done by choosing $CL_{(M+j)}$ to be much larger than other capacitances to output line $OL_j$, and by choosing $CL_{(M+N+j)}$ to be much larger than other capacitances to output line $OL_{N+j}$. Alternatively, this can be done by choosing $CL_{(M+j)}$ and $CL_{(M+N+j)}$ to complement the combined value of the other capacitances connecting the same output line. The input voltage to output driver amplifier $OD_j$ will (to good approximation) have the following value, $v_j$, in accordance with Coulomb's Law.

$$v_j = (C_j)^{-1} \sum_{i=1}^{M} (C_{i,j} - C_{i,(j+M)}) \ x_i \tag{5}$$

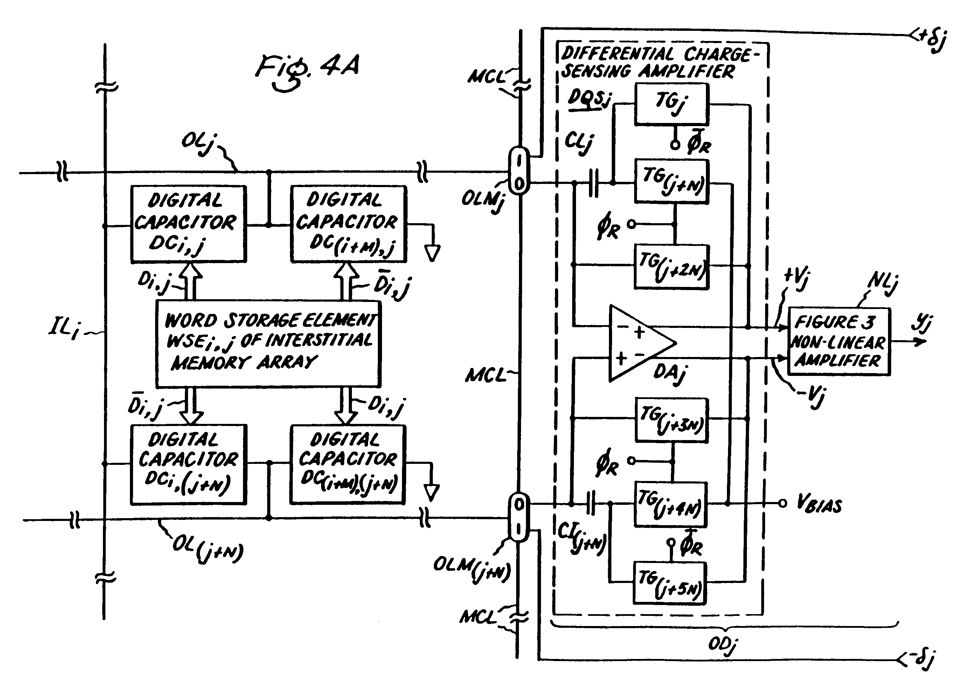

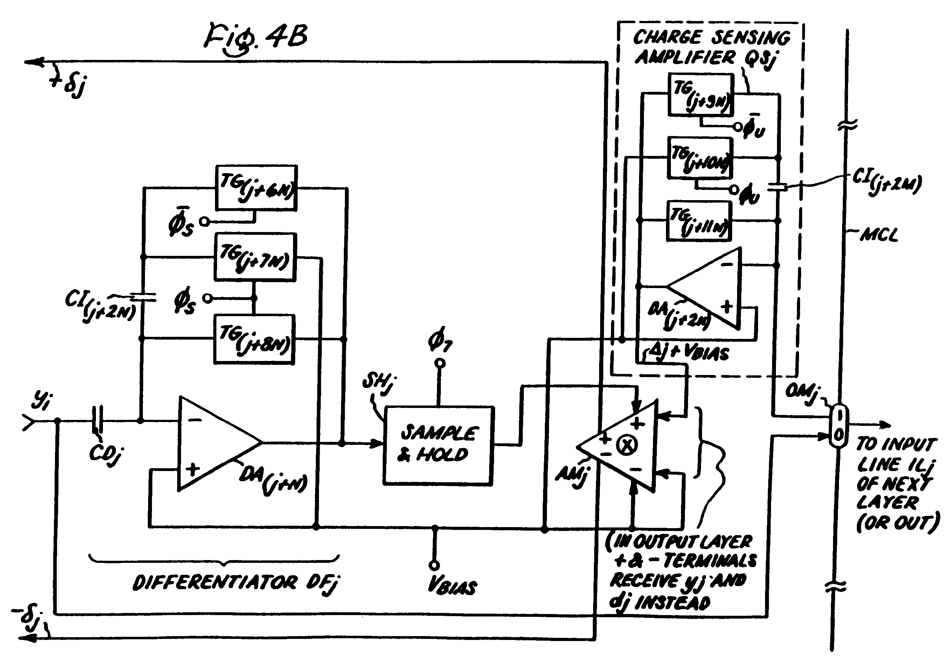

The generation of voltage $v_j$ can be viewed as the superposition of a plurality of capacitive divisions between, on the one hand, the effective capacitance $(C_{(i,j)} - C_{i,(j+N)})$ each input voltage has to output line $OL_j$ and, on the other hand, the total capacitance $C_j$ of the output line to its surroundings. That is, $C_j$ is the total capacitance on output line $OL_j$ or the total capacitance on output line $OL_{(N+j)}$, which capacitances should be equal to each other and fixed in value. Where the difference in charge appearing on the output lines $OL_j$ and $OL_{(j+N)}$ is sensed by fully differential charge-sensing amplifiers preceding the non-linear voltage amplifiers in the output driver amplifiers, as will be described later on in this specification in connection with FIGURE 4, the output signals from the charge-sensing amplifiers will be balanced with reference to a reference $V_{BIAS}$ potential.

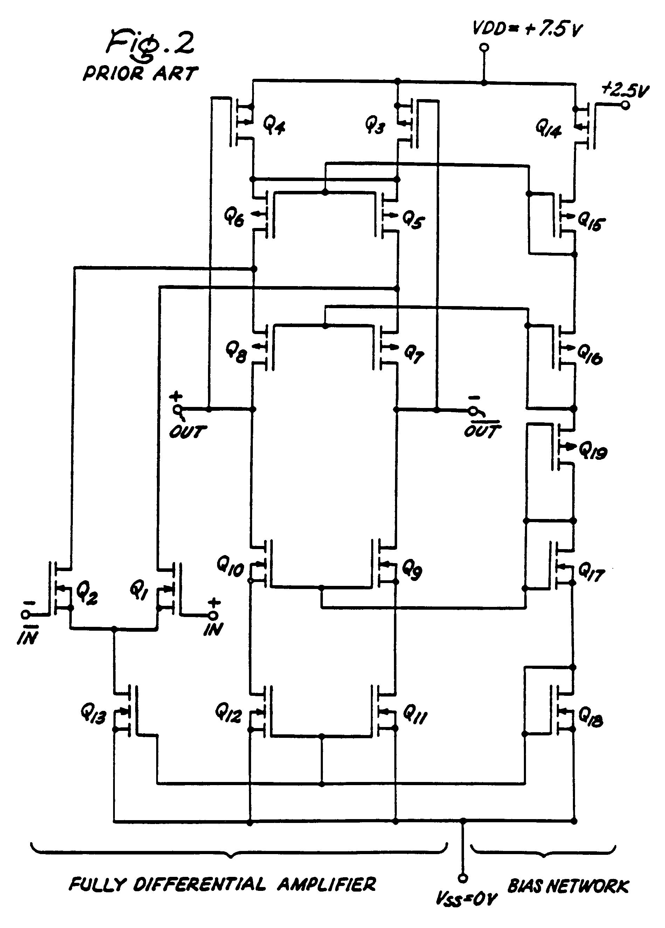

FIGURE 2 shows a fully differential amplifier constructed of MOS field-effect transistors $Q_1$ - $Q_{13}$, as may serve for any one of the fully differential amplifiers $DA_j$ for $j$ = 1, 2, ...N. Also shown is a bias network constructed of MOS field effect transistors $Q_{14}$ - $Q_{19}$ for generating direct bias potentials for application to that fully differential amplifier and to others of its kind. This circuitry is described in more detail on pages 255-257 of the book <u>Analog MOS Integrated Circuits for Signal Processing</u> by R. Gregorian and G.C. Temes, copyright 1986, published by John Wiley & Sons, Inc., of New York, Chichester, Brisbane, Toronto and Singapore.

The fully differential amplifier includes a long-tailed-pair connection of n-channel MOSFETs $Q_1$ and $Q_2$ providing common-mode rejection for the input voltages IN and $\overline{IN}$ applied to the (+) and (-) input terminals at their respective gate electrodes. N-channel MOSFET $Q_{13}$ is connected as a constant-current sink for tail current from the interconnection between the source electrodes of $Q_1$ and $Q_L$. $Q_1$ and $Q_2$ are in folded cascode connections with p-channel MOSFETs $Q_7$ and $Q_8$ respectively. There is also common mode rejection for output voltages OUT and $\overline{OUT}$ appearing at the (+) and (-) output terminals connecting from the drain electrodes of $Q_7$ and $Q_8$ respectively, which is why the differential amplifier comprising $Q_1$ - $Q_{13}$ is described as being "fully" differential. This common mode rejection is provided by common-mode degenerative feedback connections from the (-) and (+) output terminals to the gate electrodes of p-channel MOSFETs $Q_3$ and $Q_4$, the paralleled source-to-drain paths of which supply current to the joined source electrodes of p-channel MOSFETs $Q_5$ and $Q_6$ operated as a current splitter. $Q_5$ drain current biases the folded cascode connection of $Q_1$ and $Q_7$, and $Q_6$ drain current biases the folded cascode connection of $Q_2$ and $Q_8$. N-channel MOSFETs $Q_9$ and $Q_{11}$ are in a cascode connection biased to provide a high-impedance constant-current sink as drain load to $Q_7$, and n-channel MOSFETs $Q_{10}$ and $Q_{12}$ are in a cascode connection biased to provide a high-impedance constant-current sink as drain load to $Q_8$.

The (+) and (-) output terminals can be biased to the same (+2.5v) potential as applied to the gate electrode of MOSFET $Q_{14}$ by causing MOSFETs $Q_1$-$Q_{18}$ to have the following width-to-length ratios presuming $Q_1$, Q2, Q7 and $Q_8$ to have equal amplitude quiescent channel currents.

$$(W/L)_{11} : (W/L)_{12} : (W/L)_{13} : (W/L)_{18} :: 2:2:1:1 \quad (6)$$
$$(W/L)_3 : (W/L)_4 : (W/L)_{14} :: 1:1:1 \quad (7)$$
$$(W/L)_5 : (W/L)_6 : (W/L)_{15} :: 1:1:1 \quad (8)$$
$$(W/L)_7 : (W/L)_8 : (W/L)_{16} :: 2:2:1 \quad (9)$$
$$(W/L)_9 : (W/L)_{10} : (W/L)_{17} :: 2:2:1 \quad (10)$$

The width-to-length ratio of MOSFET $Q_{19}$ is chosen to provide responsive to the drain current demand of $Q_{14}$ a voltage drop across $Q_{19}$ channel that affords sufficient operating voltage range for signals at terminals out and $\overline{OUT}$.

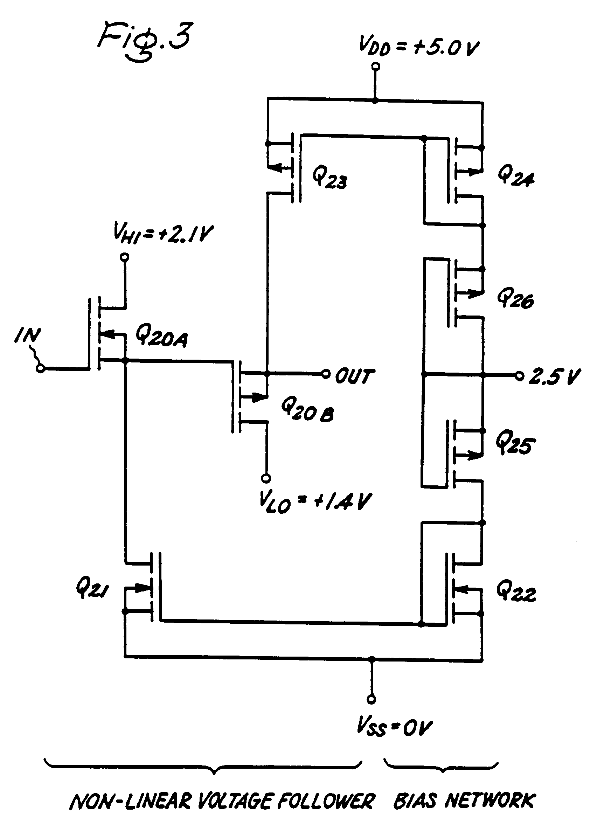

FIGURE 3 shows non-linear voltage amplifier circuitry that can be used after linear voltage amplifier circuitry to implement each non-linear output driver amplifier $OD_j$ in the FIGURE 1 neural net layer. The FIGURE 3 non-linear voltage amplifier is a cascade connection of two source-follower transistors, one ($Q_{20A}$) being an n-channel MOSFET and the other ($Q_{20B}$) being a p-channel MOSFET. $Q_{20A}$ is provided a constant-current generator source load by an n-channel MOSFET $Q_{21}$, which is the slave or output transistor of a current mirror amplifier including as its master or input transistor an n-channel MOSFET $Q_{22}$ self-biased by drain-to-gate feedback. $Q_{20B}$ is provided a constant-current generator source load by a p-channel MOSFET $Q_{23}$, which is the slave or output transistor of a current mirror amplifier including as its master or input transistor a p-channel MOSFET $Q_{24}$ self-biased by drain-to-gate feedback. $Q_{22}$ and $Q_{24}$ are connected as diodes by their respective drain-to-gate feedback connections, and these diodes are connected in series with another diode-connected n-channel MOSFET $Q_{25}$ and with another diode-connected p-channel MOSFET $Q_{26}$ between $V_{SS}$ and $V_{DD}$ potentials to implement a bias network. In this bias network a quiescent input current flows from the input port of the current mirror amplifier comprising $Q_{23}$, $Q_{24}$ into the input port of the current mirror amplifier comprising $Q_{21}$, $Q_{22}$. $Q_{21}$ and $Q_{23}$ drain current flows are similar-valued by current mirror amplifier action.

All the n-channel MOSFETs $Q_{20A}$, $Q_{21}$, $Q_{22}$ and $Q_{25}$ have similar channel widths and lengths and exhibit similar operating characteristics. All the p-channel MOSFETs $Q_{20B}$, $Q_{23}$, $Q_{24}$ and $Q_{26}$ have similar channel widths and lengths and exhibit similar operating characteristics, which are complementary to those of the n-channel MOSFETs. The bias network MOSFETs $Q_{22}$, $Q_{24}$, $Q_{25}$ and $Q_{26}$ may be shared by a plurality of the FIGURE 3 non-linear voltage amplifier circuits to conserve hardware and operating power.

Non-linearity of response in the FIGURE 3 voltage amplifier comes about because (1) source-follower action of $Q_{20A}$ for positive-going excursions of its gate electrode potential becomes limited as its source potential approaches its drain potential $V_{HI}$ and (2) source-follower action of $Q_{20}$ for negative-going excursions of its gate electrode potential becomes limited as its source potential approaches its drain potential $V_{LO}$. At the source electrode of source-follower $Q_{20B}$ there is a sigmoidal response to a linear ramp potential applied to the gate electrode of source-follower $Q_{20A}$. The voltages $V_{LO}$ and $V_{HI}$ can be programmed to control the limiting properties of the FIGURE 3 non-linear amplifier, and the voltages $V_{LO}$ and $V_{HI}$ may be selected to provide for sym-

7

metry of response or for asymmetry of response. FIGURE 3 shows representative values for $V_{HI}$ and $V_{LO}$ that provide a substantially symmetrical response about +2.5 volts.

Output driver amplifier $OD_j$ can use non-linear voltage amplifier circuitry different from that shown in FIGURE 3. For example, source followers $Q_{20A}$ and $Q_{20B}$ can be reversed in order of their cascade connection. Either this alternative circuitry or the FIGURE 3 circuitry can be preceded by a charge-sensing amplifier, rather than a linear voltage amplifier, to realize the type of output driver amplifier used in FIGURE 4, FIGURE 9, FIGURE 14 and FIGURE 16 neural nets. In the FIGURE 1 and FIGURE 13 neural nets the output driver amplifiers can be realized without using the FIGURE 3 circuitry or the previously described alternative circuitry. For example, each output driver amplifier can comprise a long-tailed pair connection of transistors having a current mirror amplifier load for converting their output signal voltage to single-ended form. The long-tailed pair connection of transistors is a differential amplifier connection where their source electrodes have a differential-mode connection to each other and to a constant-current generator.

Consider now, referring to FIGURE 1, how neuron model behavior is exhibited by input driver amplifier $ID_i$ capacitors $C_{i,j}$ and $C_{i,(j+N)}$ , and non-linear output driver amplifier $OD_j$ for particular respective values of i and j. If the capacitance of capacitor $C_{i,j}$ is larger than the capacitance of capacitor $C_{i,(j+N)}$ for these particular values of i and j, then the output voltage $y_j$ for that j will exhibit "excitory" response to the input voltage $x_i$. If the capacitances of $C_{i,j}$ and $C_{i,(j+N)}$ are equal for these i and j values, then the output voltage $Y_j$ for that j should exhibit no response to the input voltage $x_i$. If the capacitance of capacitor $C_{i,j}$ is smaller than the capacitance of capacitor $C_{i(j+N)}$ for those i and j values, then the output voltage $y_j$ for that j will exhibit "inhibitory" response to the input voltage $x_i$.

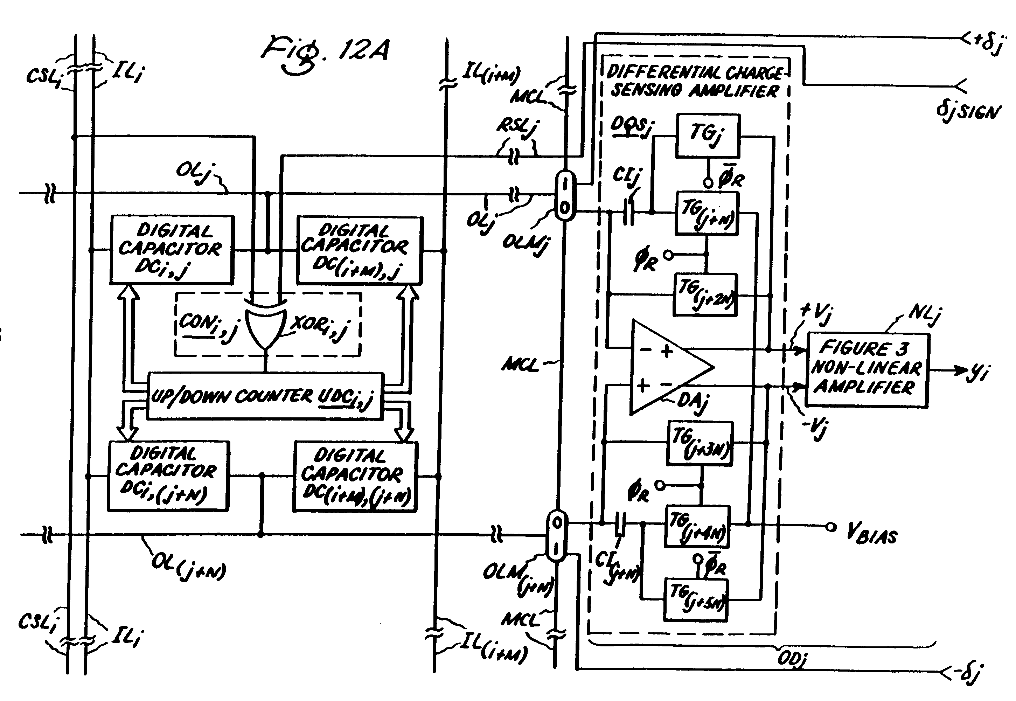

In some neural nets constructed in accordance with the invention the capacitors $C_{i,j}$ and $C_{i,(j+N)}$ for all i and j may be fixed-value capacitors, so there is never any alteration in the weighting of input voltages $x_i$ where i=1,...M. However, such neural nets lack the capacity to adapt to changing criteria for neural responses -- which adaptation is necessary, for example, in a neural network that is to be connected for self-learning. It is desirable in certain applications, then, to provide for altering the capacitances of each pair of capacitors $C_{i,j}$ and $C_{i,(j+N)}$ associated with a respective pair of values of i and j. This alteration is to be carried out in a complementary way, so the sum of the capacitances of $C_{i,j}$ and of $C_{i(j+N)}$ remains equal to $C_k$. For example, this can be implemented along the lines of the inventor's previous teachings in regard to "digital" capacitors, having capacitances controlled in proportion to binary-numbers used as control signals, as particularly disclosed in connection with FIGURE 11 of his U.S. patent No. 3,890,635 issued 17 June 1975, entitled "VARIABLE CAPACITANCE SEMICONDUCTOR DEVICES" and assigned to General Electric Company. Each pair of capacitors $C_{i,j}$ and $C_{i,j+N)}$ is then two similar such capacitors and their capacitances are controlled by respective control signals, one of which is the one's complement of the other.

Alternatively, the pair of capacitors $C_{i,j}$ and $C_{i,(j+N)}$ may be formed from selecting each of a set of component capacitors with capacitances related in accordance with powers of two to be a component of one or the other of the pair of capacitors $C_{i,j}$ and $C_{i(j+N)}$, the selecting being done by field effect transistors (FETs) operated as transmission gates. Yet another way of realizing the pair of capacitors $C_{i,j}$ and $C_{i,(j+N)}$ is to control the inverted surface potentials of a pair of similar size metal-oxide-semiconductor (MOS) capacitors with respective analog signals developed by digital-to-analog conversion.

FIGURE 4, comprising component FIGURES 4A and 4B, shows a representative modification that can be made to the FIGURE 1 neural net near each set of intersections of output lines $OL_j$ and $OL_{(j+N)}$ with an input line $IL_i$ from which they receive with differential weighting a synapse input signal $x_i$. Such modifications together make the neural net capable of being trained. Each capacitor pair $C_{i,j}$ and $C_{i,(j+N)}$ of the FIGURE 1 neural net is to be provided by a pair of digital capacitors $DC_{i,j}$ and $DC_{i,(j+N)}$. (For example, each of these capacitors $DC_{i,j}$ and $DC_{i,(j+N)}$ may be as shown in FIGURE 11 of U.S. patent No. 3,890,635). The capacitances of $DC_{i,j}$ and $DC_{i,(j+N)}$ are controlled in complementary ways by a digital word and its one's complement, as drawn from a respective word-storage element $WSE_{i,j}$ in an array of such elements located interstitially among the rows of digital capacitors and connected to form a memory. This memory may, for example, be a random access memory (RAM) with each word-storage element $WSE_{i,j}$ being selectively addressable by row and column address lines controlled by address decoders. Or, by way of further example, this memory can be a plurality of static shift registers, one for each column j. Each static shift register will then have a respective stage $WSE_{i,j}$ for storing the word that controls the capacitances of each pair of digital capacitors $DC_{i,j}$ and $DC_{i,(j+N)}$.

The word stored in word storage element $WSE_{i,j}$ may also control the capacitances of a further pair of digital capacitors $DC_{(i+M),j}$ and $DC_{(i+M),(j+N)}$, respectively. The capacitors $DC_{(i+M),j}$ and $DC_{(i+M),(j+N)}$ connect between "ac ground" and output lines $OL_j$ and $OL_{(j+N)}$, respectively, and form parts of the loading capacitors $CL_{(M+j)}$. The capacitances of $DC_{(i+2M,j)}$ and $DC_{i,j}$ are similar to each other and changes in their respective values track each other. The capacitances of $DC_{(i+M),(j+N)}$ and $DC_{i,(j+N)}$ are similar to each other and changes in their respective values track each other. The four digital capacitors $DC_{i,j}$, $DC_{j,(j+N)}$, $DC_{(i+M),j}$ and $DC_{(ik+M),\ (j+N)}$ are connected in a bridge configuration having input terminals connecting from the input line $IL_i$ and from a-c ground respectively and having output terminals connecting to output lines $OL_j$ and $OL_{(j+N)}$ respectively. This bridge configuration facilitates making computations associated with back-propagation programming by helping make the capacitance network bilateral insofar as voltage gain is concerned. Alternatively, where the computations for back-propagation programming are done by computers that do not involve the neural net in the computation procedures, the neural net need not include the digital capacitors $DC_{(i+M),j}$ and $DC_{(i+M),(j+N)}$.

When the FIGURE 4 neural net layer is being operated normally, following programming, the $\phi_P$ signal applied to a mode control line MCL is a logic ZERO. This ZERO on mode control line MCL conditions each output line multiplexer $OLM_j$ of an N-numbered plurality thereof to select the output line $OL_j$ to the inverting input terminal of a respective associated fully differential amplifier $DA_j$. This ZERO on mode control line MCL also conditions each output line multiplexer $OLM_{(j+N)}$ to select the output line $OL_{(j+N)}$ to the non-inverting input terminal of the respective associated fully differential amplifier $DA_j$. Differential amplifier $DA_j$, which may be of the form shown in FIGURE 2, is included in a respective charge-sensing amplifier $QS_j$ that performs a charge-sensing operation for output line $OL_j$. In furtherance of this charge-sensing operation, a transmission gate $TG_j$ responds to the absence of a reset pulse $Q_R$ to connect an integrating capacitor $CI_j$ between the (+) output and (-) input terminals of amplifier $DA_j$; and a transmission gate $TG_{(j+5N)}$ responds to the absence of the reset pulse $\phi_R$ to connect an integrating capacitor $CI_{(j+N)}$ between the (-) output and (+) input terminals of amplifier $DA_j$. With integrating capacitors $CI_j$ and $CI_{(j+N)}$ so connected, amplifier $DA_j$ functions as a differential charge amplifier. When $\phi_P$ signal on mode control line MCL is a ZERO, the input signal $x_i$ induces a total differential charge in charge on the capacitors $DC_{i,j}$ and $DC_{i,(j+N)}$ proportional to the difference in their respective capacitances. The resulting displacement current flows needed to keep the input terminals of differential amplifier $DA_j$ substantially equal in potential requires that there be corresponding displacement current flow from the integrating capacitor $CI_j$ and $CI_{(j+N)}$ differentially charging those charging capacitors to place thereacross a differential voltage $v_j$ defined as follows.

$$v_j = (CI_j + CI_{(j+N)})^{-1} \sum_{i=1}^{M} (C_{i,j} - C_{(i+M),j}) x_i$$

$$(11)$$

The half $V_j$ signal from the non-inverting (+) output terminal of amplifier $DA_j$ is supplied to a non-linear voltage amplifier circuit $NL_j$ which can be the non-linear voltage amplifier circuit of FIGURE 3 or an alternative circuit as previously described. The non-linear voltage amplifier circuit $NL_j$ responds to generate the axon output response $y_j$. It is presumed that this non-linear voltage amplifier $NL_j$ supplies $y_j$ at a relatively low source impedance as compared to the input impedance offered by the circuit $y_j$ is to be suppled to - e.g. on input line in a succeeding neural net layer. If this is so there is no need in a succeeding neural net layer to interpose an input driver amplifier $ID_i$ as shown in FIGURE 1. This facilitates interconnections between successive neural net layers being bilateral. An output line multiplexer $OLM_j$ responds to the $\phi_P$ signal appearing on the mode control line MCL being ZERO to apply $y_j$ to an input line of a succeeding neural net layer if the elements shown in FIGURE 4 are in a hidden layer. If the elements shown in FIGURE 4 are in the output neural net layer, output line multiplexer $OLM_j$ responds to the $\phi_P$ signal on the mode control line being ZERO to apply $y_j$ to an output terminal for the neural net.

From time to time, the normal operation of the neural net is interrupted; and, to implement dc-restoration a reset pulse $\phi_R$ is supplied to the charge sensing amplifier $QS_j$. Responsive to $\overline{\phi_R}$, the logic complement of the reset pulse $\phi_R$, going low when $\phi_R$ goes high, transmission gates $TG_j$ and $TG_{(j+SN)}$ are no longer rendered conductive to connect the integrating capacitors $CI_j$ and $CI_{(j+N)}$ from the output terminals of differential amplifier $DA_j$. Instead, transmission gates $TG_{(j+N)}$ and $TG_{(j+4N)}$ respond to $\phi_R$ going high to connect to $V_{BIAS}$ the plates of capacitor $CI_j$ and $CI_{(j+N)}$ normally connected from those output terminals, $V_{BIAS}$ being the 2.5 volt intermediate potential between the $V_{SS} = 0$ volt and $V_{DD} = 5$ volt operating voltages of differential amplifier $DA_j$. Other transmission gates $TG_{(j+2N)}$ and $TG_{(J+3N)}$ respond to $\phi_R$ going high to apply direct-coupled degenerative feedback from the output terminal of differential amplifier $DA_j$ to its input terminals, to bring the voltage at the output terminals to that supplied to its inverting input terminal from output lines $OL_j$ and $OL_{(j+N)}$. During the dc-restoration all $x_i$ are "zero-valued". So, the charges on integrating capacitor $CI_j$ and $CI_{(j+N)}$ are adjusted to compensate for any differential direct voltage error occurring in the circuitry up to the output terminals of differential amplifier $DA_j$. Dc-restoration is done concurrently for all differential amplifiers $DA_j$ (i.e., for values of j ranging from one to N).

During training, the $\phi_P$ signal applied to mode control line MCL is a logic ONE, which causes the output line multiplexer $OLM_j$ to disconnect the output lines $OL_j$ and $OL_{(j+N)}$ from the (+) and (-) input terminals of dif-

ferential amplifier $DA_j$ and to connect the output lines $OL_j$ and $OL_{(j+N)}$ to receive $+\delta_j$ and $-\delta_j$ error terms. These $+\delta_j$ and $-\delta_j$ error terms are generated as the balanced product output signal of a analog multiplier $AM_j$, responsive to a signal $\Delta_j$ and to a signal $y'_j$ which is the change in output voltage $y_j$ of nonlinear amplifier $NL_j$ for unit change in the voltage on output line $OL_j$. The term $\Delta_j$ for the output neural net layer is an error signal that is the difference between $y_j$ actual value and its desired value $d_j$. The term $\Delta_j$ for a hidden neural net layer is also an error signal, which is of a nature that will be explained in detail further on in this specification.

Differentiator $DF_j$ generates the signal $y'_j$, which is a derivative indicative of the slope of $y_j$ change in voltage on output line $OL_j$, superposed on $V_{BIAS}$. To determine the $y'_j$ derivative, a pulse doublet comprising a small positive-going pulse immediately followed by a similar-amplitude negative-going pulse is introduced at the inverting input terminal of differential amplifier $DA_j$ (or equivalently, the opposite-polarity doublet pulse is introduced at the non-inverting input terminal of differential amplifier $DA_j$) to first lower $y_j$ slightly below normal value and then raise it slightly above normal value. This transition of $y_j$ from slightly below normal value to slightly above normal value is applied via a differentiating capacitor $CD_j$ to differentiator $DF_j$.

Differentiator $DF_j$ includes a charge sensing amplifier including a differential amplifier $DA_{(j+N)}$ and an integrating capacitor $CI_{(j+N)}$. During the time that $y_j$ is slightly below normal value, a reset pulse $\phi_S$ is applied to transmission gates $TG_{(j+4N)}$ and $TG_{(j+5N)}$ to render them conductive. This is done to drain charge from integrating capacitor $CI_{(j+N)}$, except for that charge needed to compensate for $DA_{(j+N)}$ input offset voltage error. The reset pulse $\phi_S$ ends, rendering transmission gates $TGB_{(j+4N)}$ and $TG_{(j+5N)}$ no longer conductive, and the complementary signal $\bar{\phi}_S$ goes high to render a transmission gate $TG_{(j+3N)}$ conductive for connecting integrating capacitor $CI_{(j+N)}$ between the output and inverting-input terminals of differential amplifier $DA_{(j+N)}$.

With the charge-sensing amplifier comprising elements $DA_{(j+N)}$ and $CI_{(j+N)}$ reset, the small downward pulsing of $y_j$ from normal value is discontinued and the small upward pulsing of $y_j$ from normal value occurs. The transition between the two abnormal conditions of $y_j$ is applied to the charge-sensing amplifier by electrostatic induction via differentiating capacitor $CD_j$. Differential amplifier $DA_{(j+N)}$ output voltage changes by an amount $y'_j$ from the $V_{BIAS}$ value it assumed during reset. The use of the transition between the two pulses of the doublet, rather than the edge of a singlet pulse, to determine the derivative $y'_j$ makes the derivative-taking process treat more similarly those excitory and inhibiting responses of the same amplitude. The doublet pulse introduces no direct potential offset error into the neural net layer.

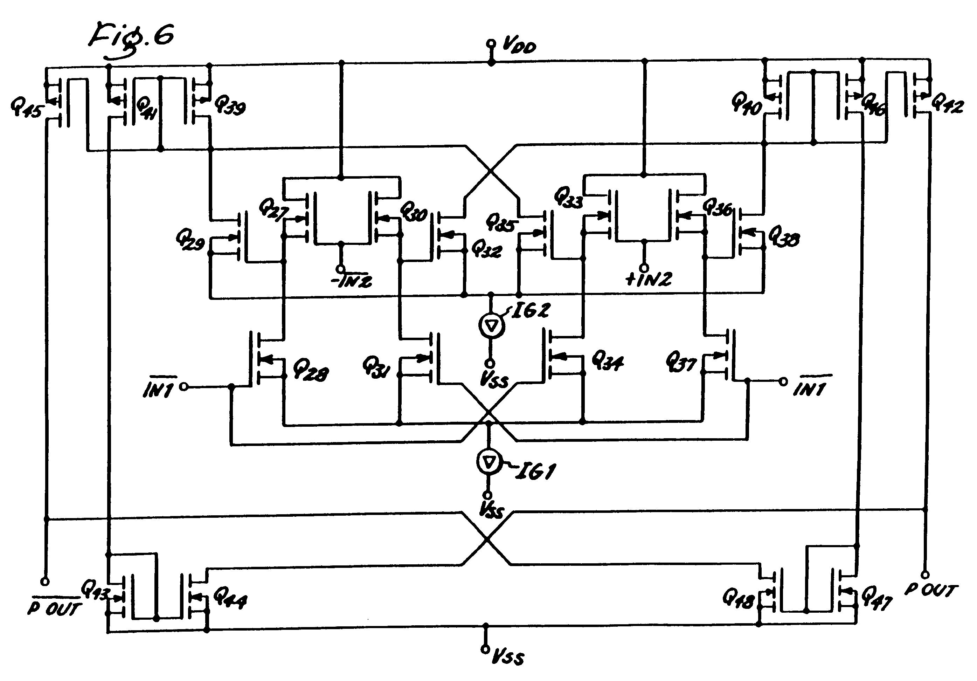

Responsive to a pulse $\phi_T$, the value $y'_j + V_{BIAS}$ from differentiator $DF_j$ is sampled and held by row sample and hold circuit $RSH_j$ for application to analog multiplier $AM_j$ as an input signal. This sample and hold procedure allows $y_j$ to return to its normal value, which is useful in the output layer to facilitate providing $y_j$ for calculating $(y_j - d_j)$. The sample and hold circuit $RSH_j$ may simply comprise an L-section with a series-arm transmission-gate sample switch and a shunt-leg hold capacitor, for example. Analog multiplier $AM_j$ is of a type accepting differential input signals, as will be described in greater detail further on in connection with FIGURE 6. The difference between $y'_j + V_{BIAS}$ and $V_{BIAS}$ voltages is used as a differential input signal to analogy multiplier $AM_j$, which exhibits common-mode rejection for the $V_{BIAS}$ term.

During training, the $\phi_P$ signal applied to mode control line MCL is a logic ONE, as previously noted. When the FIGURE 4 elements are in the output layer, the ONE on mode control line MCL conditions an output multiplexer $OM_j$ to discontinue the application of $y_j$ signal from non-linear amplifier $NL_j$ to an output terminal. Instead, the output multiplexer $OM_j$ connects the output terminal to a charge-sensing amplifier $QS_j$. Charge sensing amplifier $QS_j$ includes a differential amplifier $DA_{(j+2N)}$ and an integrating capacitor $CI_{(j+2N)}$ and is periodically reset responsive to a reset pulse $\phi_U$. Reset pulse $\phi_U$ can occur simultaneously with reset pulse $\phi_S$, for example. Output signal $\Delta_j$ from charge-sensing amplifier $QS_j$ is not used in the output layer, however. Analog multiplier $AM_j$ does not use $\Delta_j + V_{BIAS}$ and $V_{BIAS}$ as a differential input signal in the output layer, $(y_j - d_j)$ being used instead.

When the FIGURE 4 elements are in a hidden neural net layer, $\phi_P$ signal on the mode control line MCL being a ONE conditions output multiplexer $OM_j$ to discontinue the application of $y_j$ signal from non-linear amplifier $NL_j$ to the input line $IL_j$ of the next neural net layer. Instead, output multiplexer $OM_j$ connects the input line $IL_j$ to a charge-sensing amplifier $QS_j$. Charge-sensing amplifier $QS_j$ senses change in the charge on input line $IL_j$ during training to develop a $\Delta_j$ error signal superposed on $V_{BIAS}$ direct potential. The difference between $\Delta_j + V_{BIAS}$ and $V_{BIAS}$ voltages is used as a differential input signal to analog multiplier $AM_j$, which multiplier exhibits common-mode rejection for the $V_{BIAS}$ term.

Charge-sensing amplifier $QS_j$ employs a differential-input amplifier $DA_{(j+2N)}$ and an integrating capacitor $CI_{(j+2N)}$. Transmission gates $TG_{(j+9N)}$, $TG_{(j+10N)}$ and $TG_{(j+11N)}$ cooperate to provide occasional resetting of charge conditions on the integrating capacitor $CI_{j+2N}$ responsive to the reset pulse $\phi_U$.

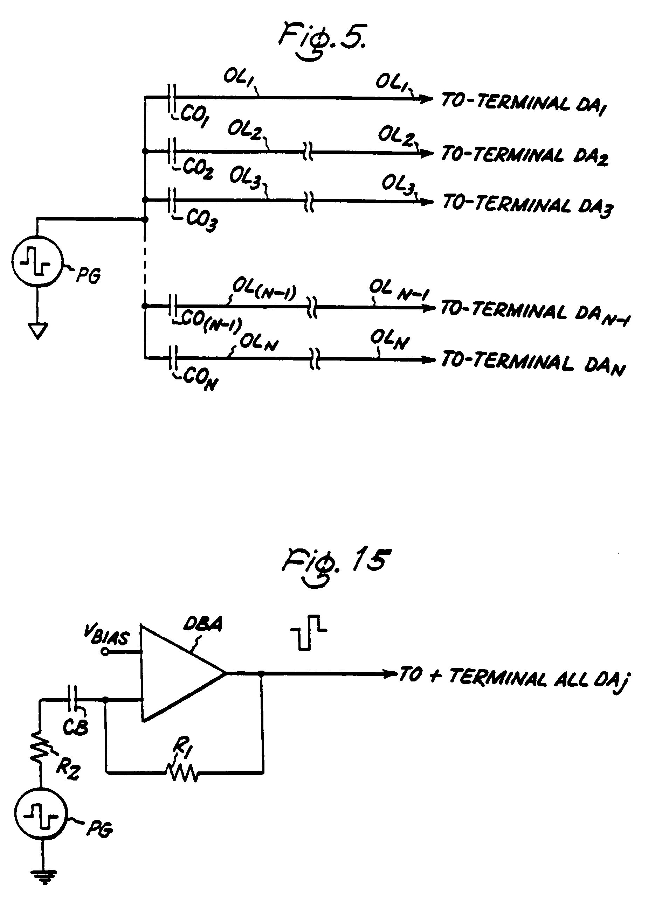

FIGURE 5 shows how each output line $OL_j$ for $j = 1, ...N$ may be pulsed during calculation of $y'_j$ terms. Each output line $OL_j$ is connected by a respective capacitor $CO_j$ to the output terminal of a pulse generator PG, which generates the doublet pulse. FIGURE 5 shows the doublet pulse applied to the end of each output line $OL_j$ remote from the - terminal of the associated differential amplifier $DA_j$ in the charge-sensing amplifier $QS_j$ sens-

ing the charge on that line. It is also possible to apply the doublet pulses more directly to those - terminals by connecting to these terminals respective ones of the plates of capacitors $CO_j$ that are remote from the plates connecting to pulse generator PG.

Each output line $OL_j$ has a respective capacitor $CO_j$ connected between it and a point of reference potential, and each output line $OL_{(j+N)}$ has a respective capacitor $CO_{(j+N)}$ connected between it and a point of reference potential, which capacitors are not shown in the drawing. The respective capacitances of the capacitors $CO_j$ and $CO_{(j+N)}$ are all of the same value, so that the back-propagation algorithm is not affected by the presence of these capacitors. Arrangements for adding the doublet pulse to $v_j$ before its application to the non-linear amplifier $NL_j$ can be used, rather than using the FIGURE 5 arrangement.

FIGURE 6 shows a four-quadrant analog multiplier supplying product output signal in balanced form at its output terminals POUT and $\overline{POUT}$. It is a modification of a single-ended-output analog multiplier described by K. Bultt and H. Wallinga in their paper "A CMOS Four-quadrant Analog Multiplier" appearing on pages 430-435 of the IEEE JOURNAL OF SOLID STATE CIRCUITS, Vol. SC-21, No. 3, June 1986, incorporated herein by reference. The FIGURE 6 analog multiplier accepts a first push-pull input signal between input terminals IN1 and $\overline{IN1}$, and it accepts a second push-pull input signal between terminals IN2 and $\overline{IN2}$.

As described by Bultt and Wallinga there are four component analog multipliers: a first comprising n-channel MOSFETs $Q_{27}$-$Q_{29}$, a second comprising n-channel MOSFETs $Q_{30}$-$Q_{32}$, a third comprising n-channel MOS-FETs $Q_{33}$-$Q_{35}$ and a fourth comprises n-channel MOSFETs $Q_{36}$-$Q_{38}$. The component analog multipliers are arranged in cross-coupled pairs to suppress quadratic and offset terms. Constant-current generator IG1 provides for floating of the potentials at input terminals $\overline{IN1}$ and IN1, and constant-current generator IG2 provides for floating of the potentials at input terminals $\overline{IN2}$ and IN2. The push-pull outputs of the four-quadrant analog multiplier are supplied to diode-connected p-channel MOSFETs $Q_{39}$ and $Q_{40}$, which are the master or input transistors of respective current mirror amplifiers., $Q_{39}$ and $Q_{40}$ have respective p-channel MOS slave or output transistors $Q_{41}$ and $Q_{42}$ associated with them in their respective current mirror amplifiers, and as in the Bultt and Wallinga analog multiplier the push-pull variations in the drain currents of $Q_{41}$ and $Q_{42}$ are converted to single-ended form at output terminal POUT using a current mirror amplifier connection of n-channel MOSFETs $Q_{43}$ and $Q_{44}$. In FIGURE 6 $Q_{39}$ and $Q_{40}$ additionally have respective further p-channel MOS slave or output transistors $Q_{45}$ and $Q_{46}$ associated with them in their respective current mirror amplifiers, which are dual-output rather than single-output in nature. The push-pull variations in the drain currents of $Q_{45}$ and $Q_{46}$ are converted to single-ended form at terminal $\overline{POUT}$ using a current mirror amplifier connection of n-channel MOSFETs $Q_{47}$ and $Q_{48}$. Since the current mirror amplifier connections of $Q_{43}$ and $Q_{47}$ are driven push-pull, the output signals at output terminals POUT and $\overline{POUT}$ exhibit variations in opposite senses of swing.

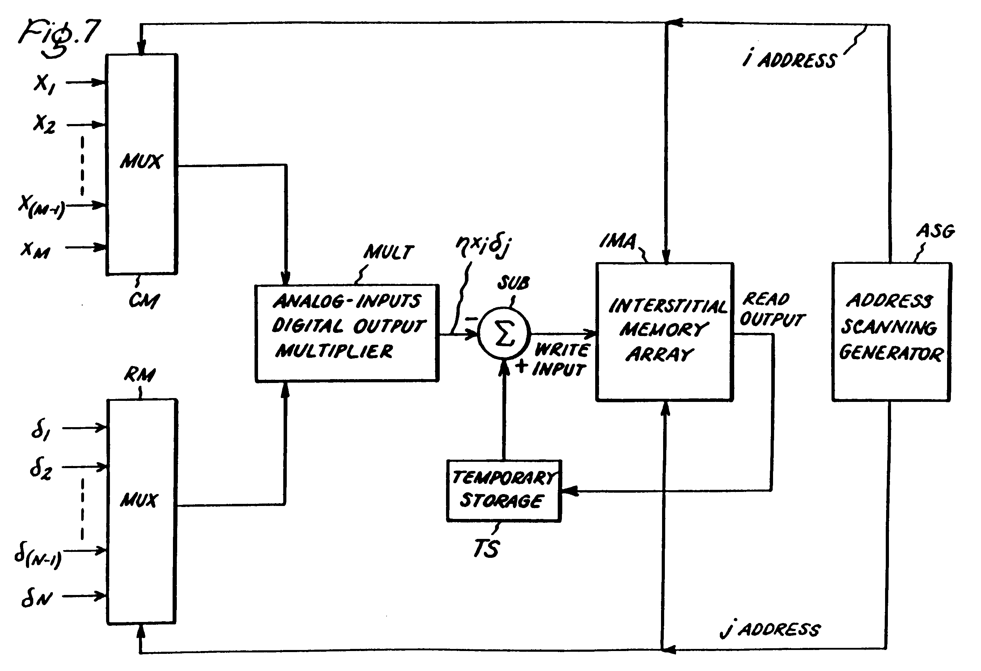

FIGURE 7 shows apparatuses for completing the back-propagation computations, as may be used with the FIGURE 1 neural net manifoldly modified per FIGURE 4. The weights at each word storage element $WSE_{i,j}$ in the interstitial memory array IMA are to be adjusted as the i column addresses and j row addresses are scanned row by row, one column at a time. An address scanning generator ASG generates this scan of i and j addresses shown applied to interstitial memory array IMA, assuming it to be a random access memory. The row address j is applied to a row multiplexer RM that selects $\delta_j$ to one input of a multiplier MULT, and the column address i is applied to a column multiplexer CM that selects $x_i$ to another input of the multiplier MULT.

Multiplier MULT is of a type providing a digital output responsive to the product of its analog input signals. Multiplier MULT may be a multiplying analog-to-digital converter, or it may comprise an analog multiplier followed by an analog-to-digital converter, or it may comprise an analog-to-digital converter for each of its input signals and a digital multiplier for multiplying together the converted signals. Multiplier MULT generates the product $x_i \delta_j$ as reduced by a scaling factor $\eta$, which is the increment or decrement to the weight stored in the currently addressed word storage element $WSE_{ij}$ in the memory array IMA. The former value of weight stored in word storage element $WSE_{ij}$ is read from memory array IMA to a temporary storage element, or latch, TS. This former weight value is supplied as minuend to a digital subtractor SUB, which receives as subtrahend $\eta x_i \delta_j$ from multiplier MULT. The resulting difference is the updated weight value which is written into word storage element $WSE_{i,j}$ in memory array IMA to replace the former weight value.

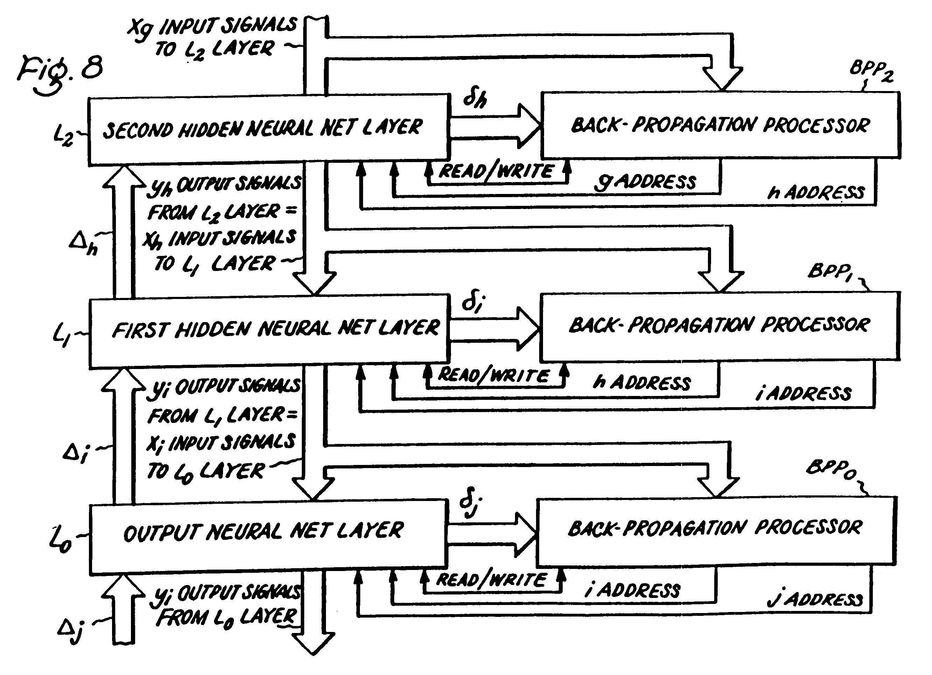

FIGURE 8 shows how trained neural net layers $L_0$, $L_1$ and $L_2$ are connected together in a system that can be trained. $L_0$ is the output neural net layer that generates $y_j$ output signals, is similar to that described in connection with FIGURES 4 and 5, and is provided with a back-propagation processor $BPP_0$ with elements similar to those shown in FIGURE 7 for updating the weights stored in the interstitial memory array of $L_0$. $L_1$ is the first hidden neural net layer which generates $y_i$ output signals supplied to the output neural net layer as its $x_i$ input signals. These $y_i$ output signals are generated by layer $L_1$ as its non-linear response to the weighted sum of its $x_h$ input signals. This first hidden neural net layer $L_1$ is provided with a back-propagation processor $BPP_1$ similar to $BPP_0$. $L_2$ is the second hidden neural net layer, which generates $y_h$ output signals supplied to the first hidden neural net layer as its $x_h$ input signals. These $y_h$ output signals are generated by layer $L_2$ as its

nonlinear response to a weighted summation of its $x_g$ input signals. This second hidden layer is provided with a back-propagation processor similar to $BPP_0$ and to $BPP_1$.

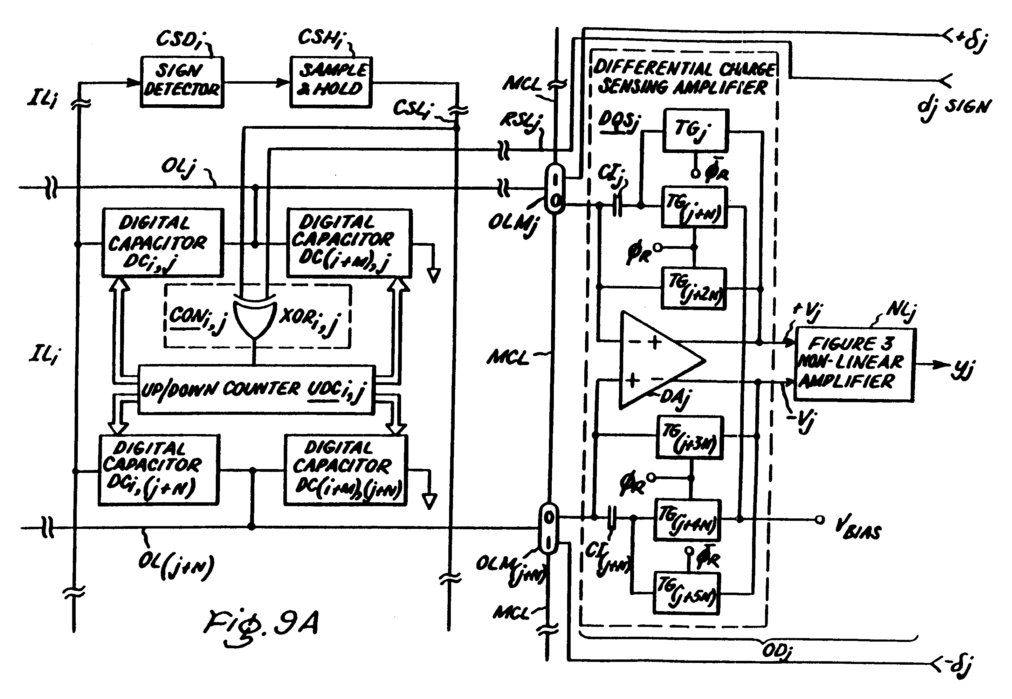

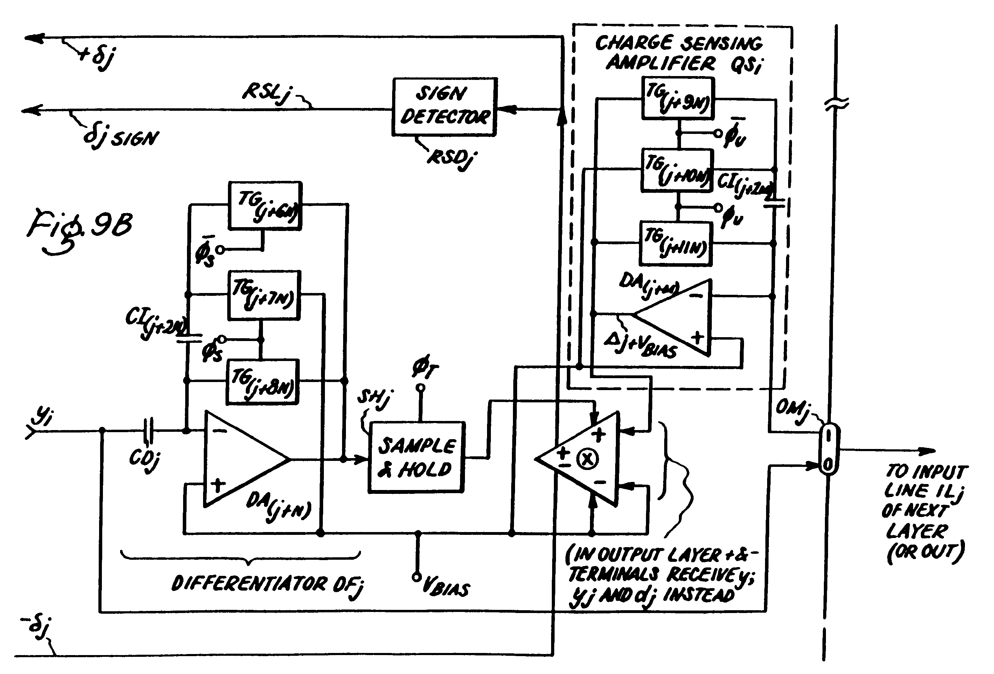

FIGURE 8 presumes that the respective interstitial memory array IMA of each neural net layer $L_0$, $L_1$, $L_2$ has a combined read/write bus instead of separate read input and write output busses as shown in FIGURE 7. FIGURE 8 shows the $\Delta_j$, $\Delta_i$ and $\Delta_h$ signals being fed back over paths separate from the feed forward paths for $y_j$, $y_i$ and $y_h$ signals, which separate paths are shown to simplify conceptualization of the neural net by the reader. In actuality, as shown in FIGURES 4 and 9, a single path may be used to transmit $y_j$ in the forward direction and $\Delta_j$ in the reverse direction, etc. Back-propagation processor $BPP_0$ modifies the weights read from word storage elements in neural net layer $L_0$ interstitial memory array by $\eta\, x_i\, \delta_j$ amounts and writes them back to the word storage elements in a sequence of read-modify-write cycles during the training procedure. Back-propagation processor $BPP_1$ modifies the weights read from word storage elements in neural net layer $L_1$ interstitial memory array by $\eta\, x_h\, \delta_i$ amounts and writes them back to the word storage elements in a sequence of read-modify-write cycles, during the training procedure. Back-propagation processor $BPP_2$ modifies the weights read and storage elements in neural net layer $L_2$ interstitial memory array by $\eta\, x_g\, \delta_h$ amounts and writes them back to the word storage element in a sequence of read-modify-write cycles during the training procedure.

FIGURE 9, comprising component FIGURES 9A and 9B shows an alternative modification that can be manifoldly made to the FIGURE 1 neural net layer to give it training capability. This alternative modification seeks to avoid the need for a high-resolution multiplier MULT and complex addressing during back-propagation calculations in order that training can be implemented. A respective up/down counter $UDC_{i,j}$ is used instead of each word storage element $WSE_{i,j}$. Correction of the word stored in counter $UDC_{i,j}$ is done a count at a time; and the counter preferably has at least one higher resolution stage in addition to those used to control the capacitances of digital capacitors $DC_{i,j}$, $DC_{(i+M),j}$, $DC_{i,(j+N)}$ and $DC_{(i+M),(j+N)}$. Each up/down counter $UDC_{i,j}$ has a respective counter control circuit $CON_{i,j}$ associated therewith. Each counter control circuit $CON_{i,j}$ may, as shown in FIGURE 9a, and described in detail further on in this specification simply consist of an exclusive-OR gate $XOR_{i,j}$.

A row sign detector RSDj detects whether the polarity of $\delta_j$ is positive or negative, indicative of whether a row of weights should in general be decremented or incremented, and broadcasts its detection result via a row sign line $RSL_j$ to all counter control circuits ($CON_{i,j}$ for i=1, ...,M) in the row j associated with that row sign detector $RSD_j$. Before making a back-propagation calculation, a respective column sign detector $CSD_i$ detects whether the polarity of $x_i$ is positive or negative for each columnar position along the row which is to be updated, to provide an indication of whether it is likely the associated weight should be decremented or incremented. This indication is stored temporarily in a (column) sample and hold circuit $CSH_i$. Each column sample and hold circuit $CSH_i$ is connected to broadcast its estimate via a column sign line $CSL_i$ to all counter control circuits ($CON_{i,j}$ for j=1, ...N) in the column i associated with that sample and hold circuit $CSH_i$. Responsive to these indications from sign detectors $CSD_i$ and $RSD_j$, each respective counter control circuit $CON_{i,j}$ decides in which direction up/down counter $UDC_{i,j}$ will count to adjust the weight control signals $D_{i,j}$ and $\overline{D}_{i,j}$ stored therein

The counter control circuitry $CON_{i,j}$ should respond to the sign of $+\delta_j$ being positive, indicating the response $v_j$ to be too positive, to decrease the capacitance to output line $OL_j$ that is associated with the signal $x_i$ or $-x_i$ that is positive and to increase the capacitance to output line $OL_j$ that is associated with the signal $-x_i$ or $x_i$ that is negative, for each value of i. The counter control circuitry $CON_{i,j}$ should respond to the sign of $+\delta_j$ being negative, indicating the response v to be too negative, to increase the capacitance to output line $OL_j$ that is associated with the signal $-x_i$ or $x_i$ that is negative and to decrease the capacitance to output line $OL_j$ that is associated with the signal $x_i$ or $-x_i$ that is positive. Accordingly, counter control circuitry $CON_{i,j}$ may simply consist of a respective exclusive-OR gate $XOR_{i,j}$ as shown in FIGURE 9a, if the following presumptions are valid.

Each of the digital capacitors $DC_{i,j}$ and $DC_{(i+M),(j+N)}$ is presumed to increase or decrease its capacitance as $D_{i,j}$ is increased or decreased respectively. Each of the digital capacitors $DC_{(i+M),j}$ and $DC_{i,(j+N)}$ is presumed to increase or decrease its capacitance as $\overline{D}_{i,j}$ is increased or decreased respectively. A ZERO applied as up/down signal to up/down counter UDCi,j is presumed to cause counting down for $D_{i,j}$ and counting up for $\overline{D}_{i,j}$. A ONE applied as up/down signal to up/down counter $UDC_{i,j}$ is presumed to cause counting up for Di,j and counting down for $\overline{D}_{i,j}$. Column sign detector $CSD_i$ output indication is presumed to be a ZERO when $x_i$ is not negative and to be a ONE when $x_i$ is negative. Row sign detector $RSD_j$ output indication is presumed to be a ZERO when $\delta_j$ is not negative and to be a ONE when $\delta_j$ is negative. Since the condition where $x_i$ or $\delta_j$ is zero-valued is treated as if the zero-valued number were positive, forcing a false correction which is in fact not necessary, and thus usually creating the need for a counter-correction in the next cycle of back-propagation training, there is dither in the correction loops. However, the extra stage or stages of resolution in each up/down counter $UDC_{i,j}$ prevent high-resolution dither in the feedback correction loop affecting the capacitances of $DC_{i,j}$, $DC_{(i+M),j}$, $DC_{i,(j+N)}$ and $DC_{(i+M),(j+N)}$.

Analog multiplier AMj develops balanced product signals, $+\delta_j$ and $\delta_j$, that can be supplied to a voltage comparator that serves as the row sign detector $RSD_j$. Alternatively, since the derivative $y'_j$ always has the same sign (normally a positive one), one can use a voltage comparator to compare the voltages supplied to input terminals of analog multiplier $Aam_j$ the other than those which receive $y'j + V_{BIAS}$ and $V_{BIAS}$ for providing the row sign detector $RSD_j$ its input signal.

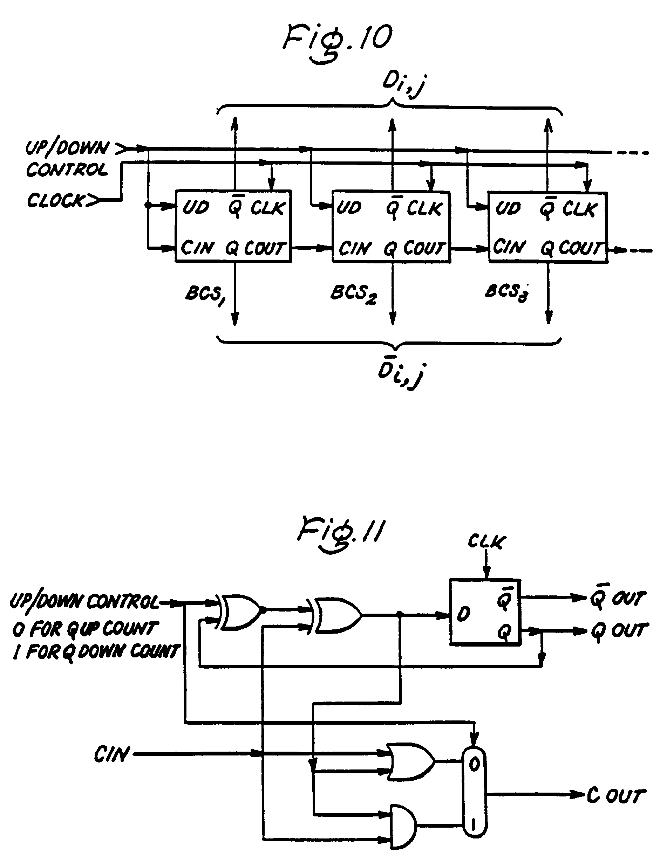

FIGURE 10 shows the construction of counter $UDC_{i,j}$ being one that has a plurality of binary counter stages $BCS_1$, $BCS_2$, $BCS_3$ that provide increasingly more significant bits of the weight control signal $D_{i,j}$ and of its one's complement $\overline{D}_{i,j}$. FIGURE 11 shows the logic within each binary counter stage which is implemented with MOS circuitry that is conventional in the art. FIGURES 10 and 11 make it clear that the opposite directions of counting for $D_{i,j}$ and $\overline{D}_{i,j}$ can be controlled responsive to a ZERO or ONE up/down control signal in either of two ways, depending on whether $Di,j$ is taken from $\overline{Q}$ outputs of the flip-flops and $\overline{Di},j$ is taken from their Q outputs, as shown, or whether $D_{i,j}$ is taken from the Q outputs of the flip-flops and $Di,j$ is taken from their $\overline{Q}$ outputs. If the latter choice had been made instead, each counter control circuit $CON_{i,j}$ would have to consist of a respective exclusive-NOR circuit, or alternatively the $CSD_i$ and $RSD_j$ sign detectors would have to be of opposite logic types, rather than of same logic type.

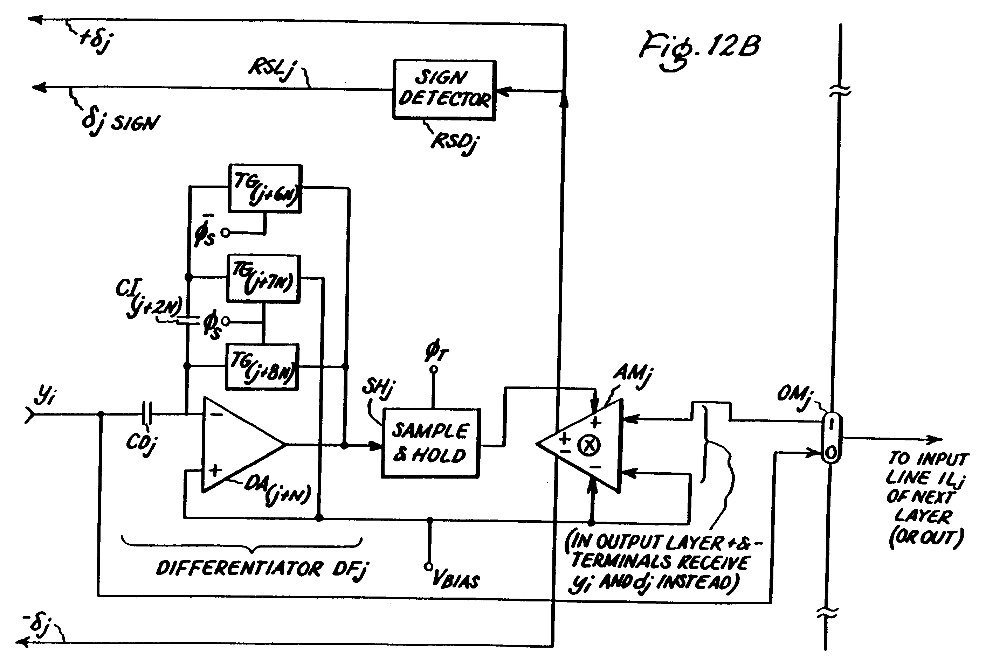

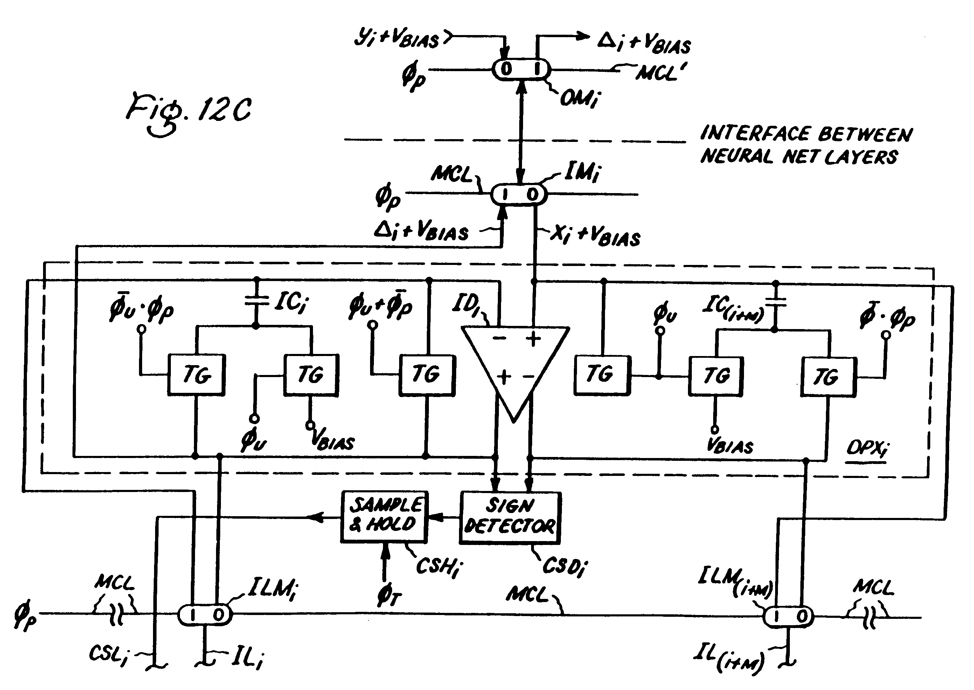

FIGURE 12 comprising FIGURES 12A, 12B and 12C shows further modification that can be made to the FIGURE 9 modification for the FIGURE 1 neural net. This modification, as shown in FIGURE 12A provides for a pair of input lines $IL_i$ and $IL_{(i+M)}$ for driving each bridge configuration of digital capacitors $DC_{i,j}$, $DC_{i,(j+N)}$, $DC_{(i+M),j}$ and $DC_{(i+M),(j+N)}$ push-pull rather than single-ended. Push-pull, rather than single-ended drive is provided to the differential charge sensing amplifier $DQS_j$, doubling its output response voltage. Push-pull drive also permits differential charge sensing amplifier $DSQ_j$ to be realized with differential-input amplifiers that do not provide for common-mode suppression of their output signals, if one so desires. FIGURE 12A differs from FIGURE 9A in that sign detector $CSD_i$ and $CSH_i$ do not appear, being relocated to appear in FIGURE 12C as shall be considered further later on.

FIGURE 12B differs from FIGURE 9B in that the single-ended charge-sensing amplifier $QS_i$ does not appear, being inappropriate for sensing differences in charge appearing on a pair of input lines. Instead, $\Delta_j + B_{BIAS}$ is developed in the following neural net layer and is fed back to analog multiplier $AM_j$ via the output multiplexer $OM_j$ when the $\phi_p$ signal on mode control line MCL is a ONE.

FIGURE 12C shows circuitry that may be used in each neural net layer to provide balanced input signal drive to a pair of input lines $IL_i$ and $IL_{(i+M)}$ during normal operation and to differentially sense the charge on those input lines during back-propagation calculations. A single fully differential amplifier $ID_i$, which is by way of example of the type shown in FIGURE 2, is multiplexed to implement both functions in duplex circuitry $DPX_i$ shown in FIGURE 12C. Alternatively the functions could be implemented with separate apparatus.

During normal operation the $\delta_P$ signal appearing on mode control line MCL is a ZERO, conditioning an input multiplexer $IM_i$ to apply $x_i$ signal to the non-inverting (+) input terminal of differential amplifier $ID_i$ and conditioning input line multiplexers $ILM_i$ and $ILM_{(i+M)}$ to connect the non-inverting (+) and inverting (-) output terminals of differential amplifier $ID_i$ to input lines $IL_i$ and $IL_{(i+M)}$ respectively. A signal $\overline{\theta}_P$ is a ONE during normal operation and appears in the $\phi_U + \theta_P$ control signal applied to a transmission gate between the non-inverting (+) output terminal of differential amplifier $ID_i$ and its inverting (-) input terminal, rendering that transmission gate conductive to provide direct-coupled feedback between those terminals. This d-c feedback conditions differential amplifier $ID_i$ to provide $x_i$ and $-x_i$ responses at its (+) and (-) output terminals to the $x_i$ signal applied to its (-) input terminal. Other transmission gates within the duplex circuitry $DPX_i$ are conditioned to be non-conductive during normal operation.

During back-propagation calculations, the $\phi_P$ signal appearing on mode control line MCL is a ONE, conditioning input multiplexer $IM_i$ to apply $\Delta_i$ signal from the non-inverting (+) output terminal of differential amplifier $ID_i$ to the preceding neural net layer, if any, and conditioning input line multiplexers $ILM_i$ and ILM_(i+M) to connect the input lines $IL_i$ and $IL_{(i+M)}$ to respective ones of the non-inverting (+) and inverting (-) input terminals of differential amplifier $ID_i$. Integrating capacitors $IC_i$ and $IC_{(i+M)}$ connect from the (+) and (-) output terminals of differential amplifier $ID_i$ to its (-) and (+) input terminals when transmission gates in duplex circuitry $DPX_i$ that are controlled by $\overline{\phi}_U \cdot \phi_P$ signal receive a ZERO during back-propagation calculations. The charge conditions on integrating capacitors $IC_i$ and $IC_{(i+M)}$ are reset when $\phi_U$ occasionally pulses to ONE during back-propagation calculations. This happens in response to transmission gates in duplexer circuitry $DPX_i$ receptive of $\phi_U$ and $\phi_U + \overline{\phi}_P$ control signals being rendered conductive responsive to $\phi u$ being momentarily a ONE, while transmission gates in duplexer circuitry $DPX_i$ receptive of $\overline{\phi}_U$ control signal being rendered non-conductive.

Column sign detector $CSD_i$ and column sample and hold circuit $CSH_i$ appear in FIGURE 12C. Column sign detector receives output signal from differential amplifier $ID_i$ directly as its input signal and can simply be a voltage comparator for the $x_i$ and $-x_i$ output signals from the differential amplifier $ID_i$.

FIGURE 13 shows a neural net comprising a plurality, N in number, of non-linear amplifiers $OD_1$, $OD_2$, $...OD_{(N-1)}$, ODN supplied respective input voltages from apparatus for matrix multiplying as described by the inventor in U.S. patent No. 4,156,284 issued 22 May 1979, entitled "SIGNAL PROCESSING APPARATUS" and assigned to General Electric Company. The apparatus for matrix multiplying weights each of a plurality, M in number, of input voltage signals $x_1$, $x_2$, ...$x_{(M-1)}$, $x_M$ supplied as "synapse" signals to provide the respective input voltages for the non-linear voltage amplifiers $OD_1$, $OD_2$, ...$OD_{N-1}$, $OD_N$, which generate respective "axon" responses $y_1$, $y_2$, ...$y_{(N-1)}$, $y_N$.

Input voltage signal $x_i$ is applied to the input port of an input driver amplifier $ID_i$ that in FIGURE 13 in turn applies its non-inverted voltage response from its (+) output port to an input line $IL_i$ and applies its inverted voltage response from its (-) output port to an input line $IL_{(i+M)}$. A respective output line $OL_j$ connects to the input port of output driver amplifier $OD_j$ ,which generates at its output port a non-linear voltage response to the cumulative charge on that respective output line $OL_j$.

The non-linear output driver amplifier $OD_j$ is shown in FIGURE 13 as being just a non-linear voltage amplifier with the quiescent direct potential applied to its input signal terminal via output line $OL_j$ being adjusted by clamping to a desired bias voltage at selected times using a respective direct-current restorer circuit $DCR_j$. The restorer circuit $DCR_j$ is shown separated from non-linear output driver $OD_j$ in FIGURE 13 to improve the layout of the drawing, but customarily is more closely associated with the output driver $OD_j$, in accordance with customary practice in dc restoration. A respective capacitor $C_{i,j}$ connects each of the input lines $IL_i$ to each of the output lines $OL_j$, and a respective capacitor $C_{(i+M),j}$ connects to each of the output lines $OL_j$ the one of the input lines $IL_{(i+M)}$ paired with that $IL_i$. Since the paired $IL_i$ and $IL_{(i+M)}$ input lines are driven with $x_i$ and $-x_i$ signal voltages respectively, the electrically equivalent circuit is $x_i$ signal voltage being applied to output line $OL_j$ by a capacitor having a capacitance that equals the capacitance of $C_{i,j}$ minus the capacitance of $C_{(i+M),j}$. This balanced input signal drive to paired input lines technique avoids the need for switched-capacitance techniques in order to obtain inhibitory as well as excitory weights, and thus facilitates operating the neural net with analog signals that are continuous over sustained per is of time, if so desired.

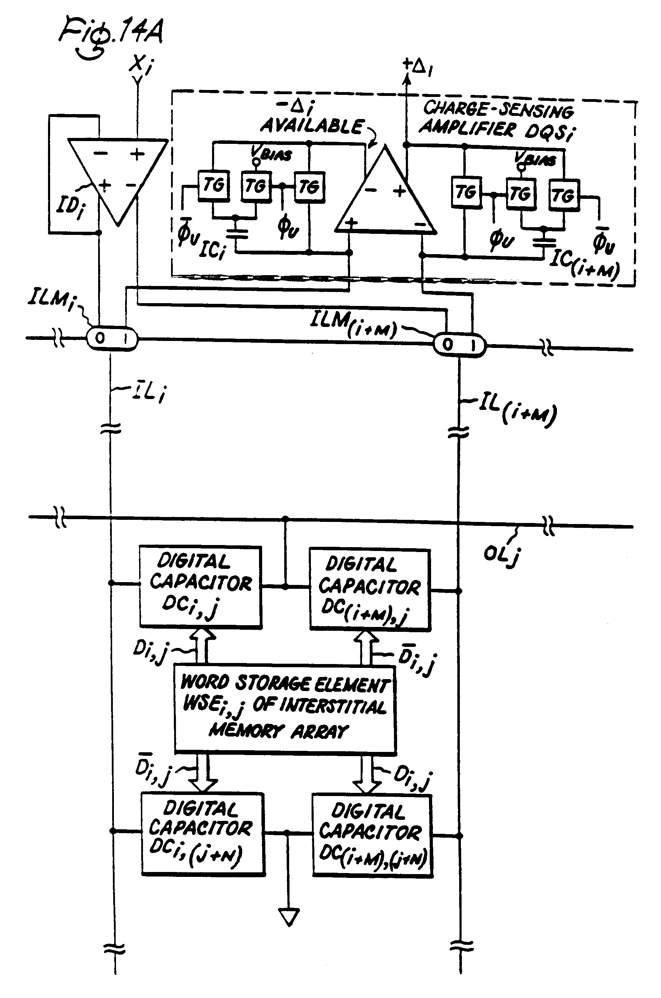

FIGURE 13 shows each of the input lines $IL_i$ or $IL_{(i+M)}$ as being provided with a respective load capacitor $CL_i$ or $CL_{(i+M)}$ to cause that capacitive loading upon each of the output terminals of the input driver amplifier $ID_i$ to be substantially the same as that upon each output port of the other input driver amplifiers. This is desirable for avoiding unwanted differential delay in responses to the input signals $x_i$. Substantially equal capacitive loading can be achieved by making the capacitance of each of the input line loading capacitors $CL_1$ - $CL_{2M}$ very large compared to the total capacitance of the capacitors $C_{i,j}$ or $C_{(i+M),j}$ connecting thereto. Preferably, however, this result is achieved by making the capacitance of each of the input line loading capacitors complement the combined value of the other capacitances connecting thereto. This procedure reduces the amount of line loading capacitance required. Where the voltage appearing on the output lines is sensed directly by the non-linear output driver amplifiers $OD_1$, ...$OD_N$, as shown in FIGURE 13, this preferable procedure makes the voltage division ratio for each input voltage $x_i$ , ... $x_M$ independent of the voltage division ratios for the other input voltages. Where the charge appearing on the output lines is sensed by charge-sensing amplifiers preceding the non-linear output driver amplifiers, as will be described later on in this specification in connection with FIGURE 14, this latter consideration is not as important.

FIGURE 13 also shows each of the output lines $OL_j$ being loaded with a respective load capacitor $CL_{(2M+j)}$ to cause the total capacitance on that line to remain substantially the same as on each of the other output lines. Again, this can be done either by choosing $CL_{(2M+j)}$ to be much larger than other capacitances to output line $OL_j$, or by choosing $CL_{(2M+j)}$ to complement the combined value of the other capacitances connecting thereto. The input voltage to output driver amplifier $OD_j$ will (to good approximation) have the following value, $v_j$, in accordance with Coulomb's Law.

$$v_j = (C_j)^{-1} \sum_{i=1}^{M} (C_{i,j} - C_{(i+M),j}) x_i$$

(12)

Here $C_j$ is the total capacitance on output line $OL_j$. The generation of voltage $v_j$ can be viewed as the superposition of a plurality of capacitive divisions between, on the one hand, the effective capacitance $(C_{(i,j)} - C_{(i+M),j})$ each input voltage has to output line $OL_j$ and, on the other hand, the total capacitance $Cj$ of the output line to its surroundings.

Consider now how neuron model behavior is exhibited by input driver amplifier $ID_i$ , capacitors $C_{i,j}$ and $C_{(i+M),j}$ and non-linear output driver amplifier $OD_j$ for particular respective values of i and j. The voltage responses input driver amplifier $ID_i$ applies to input lines $IL_i$ and $IL_{(i+M)}$ are the same in amplitude but are of opposing polarity as referred to a common-mode voltage that is designed to be nominally the same as a bias voltage $V_{BIAS}$ midway between the 0-volt $V_{SS}$ and +5-volt $V_{DD}$ supply voltages. If the capacitance of capacitor $C_{i,j}$ is larger than the capacitance of capacitor $C_{(i+M),j}$ for these particular values of i and j, then the output voltage $y_j$ for that j will exhibit "excitory" response to the input voltage $x_i$. If the capacitances of $C_{i,j}$ and $C_{(i+M),j}$ are equal for these i and j values, then the output voltage $y_j$ for that j should exhibit no response to the input voltage yj. If the capacitance of capacitor $C_{i,j}$ is smaller than the capacitance of capacitor $C_{(i+M),j}$ for those i and j values, then the output voltage $y_j$ for that j will exhibit "inhibitory" response to the input voltage $x_i$.

In some neural nets constructed in accordance with the invention the capacitors $C_{i,j}$ and $C_{(i+M),j}$ for all i and j may be fixed-value capacitors, so there is never any alteration in the weighting of input voltages $x_i$ where i=1,...M. However, such neural nets lack the capacity to adapt to changing criteria for neural responses -- which adaptation is necessary, for example, in a neural network that is to be connected for self-learning. It is desirable in certain applications, then, to provide for altering the capacitances of each pair of capacitors $C_{i,j}$ and $C_{(i+M),j}$ associated with a respective pair of values of i and j. This alteration is to be carried out in a complementary way, so the sum of the capacitances of $C_{i,j}$ and of $C_{(i+M),j}$ remains equal to $C_k$.

FIGURE 14, comprising component FIGURES 14A and 14B, shows a representative modification that can be made to the FIGURE 13 neural net near each set of intersections of an output line OLj with input lines $IL_i$ and $IL_{(i+M)}$ driven by opposite senses of a synapse input signal $x_i$. Such modifications together make the neural net capable of being trained. Each capacitor pair $C_{i,j}$ and $C_{(i+M),j}$ of the FIGURE 13 neural net is to be provided by a pair of digital capacitors $DC_{i,j}$ and $DC_{(i+M),j}$. (For example, each of these capacitors $DC_{i,j}$ and $DC_{(i+M),j}$ may be as shown in FIGURE 11 of U.S. patent No. 3,890,635). The capacitances of $DC_{i,j}$ and $DC_{(i+M),j}$ are controlled in complementary ways by a digital word and its one's complement, as drawn from a respective word-storage element $WSE_{i,j}$ in an array of such elements located interstitially among the rows of digital capacitors and connected to form a memory.

The word stored in word storage element $WSE_{i,j}$ may also control the capacitances of a further pair of digital capacitors $DC_{i,(j+N)}$ and $DC_{(i+M),(j+N)}$, respectively. The capacitors $DC_{i,(j+N)}$ and $DC_{(i+M),(j+N)}$ connect between "ac ground" and input lines $IL_i$ and $IL_{(i+M)}$, respectively, and form parts of the loading capacitors $CL_i$ and $CL_{(i+M)}$, respectively. The capacitances of $DC_{(i+M,(j+N)}$ and $DC_{i,j}$ are similar to each other and changes in their respective values track each other. The four digital capacitors $DC_{i,j}$, $DC_{(i+M)j}$, $DC_{i,(j+N)}$ and $DC_{(i+M),(j+N)}$ are connected in a bridge configuration having input terminals to which the input lines $IL_i$ and $IL_{(i+M)}$ respectively connect and having output terminals connecting to output line $OL_j$ and to ac ground respectively. The capacitances of $DC_{i,(j+N)}$ and $DC_{(i+M),j}$ are similar to each other and changes in their respective values track each other. This bridge configuration facilitates making computations associated with back-propagation programming by helping make the capacitance network bilateral insofar as voltage gain is concerned. Alternatively, where the computations for back-propagation programming are done by computers that do not involve the neural net in the computation procedures, the neural net need not include the digital capacitors $DC_{i,j+N}$ and $DC_{(i+M),(j+N)}$. These digital capacitors $DC_{i,(j+N)}$ and $DC_{(i+M),(j+N)}$ are not needed either where very large loading capacitors are placed on the output lines $OL_j$, but this alternative undesirably reduces sensitivity of the output driver amplifier $OD_j$.

When the FIGURE 14 neural net layer is being operated normally, following programming, the $\phi_P$ signal applied to a mode control line MCL is a logic ZERO. This ZERO conditions a respective input line multiplexer $ILM_i$ to connect the non-inverting output port at each input driver amplifier $ID_i$ to input line $IL_i$. The $\phi_P$ signal on mode control line being a ZERO also conditions a respective input line multiplexer $ILM_{(i+M)}$ to connect the inverting output port of each input driver amplifier $ID_i$ to input line $IL_{(i+M)}$.

A ZERO on mode control line MCL also conditions each output line multiplexer $OLM_j$ of an n-numbered plurality thereof to select the output line $OL_j$ to the inverting input terminal of a respective associated differential-input amplifier $DA_j$, included in a respective charge-sensing amplifier $QS_j$ that performs a charge-sensing operation for output line $OL_j$. In furtherance of this charge-sensing operation, a transmission gate $TG_j$ responds to the absence of a reset pulse $Q_R$ to connect an integrating capacitor $CI_j$ between the output and inverting-input terminals of differential-input amplifier $DA_j$. Amplifier $DA_j$ may be an operational amplifier of the conventional voltage amplifier type or may be an operational transconductance amplifier. With integrating capacitor $CI_j$ so connected, amplifier $DA_j$ functions as a charge amplifier. When $\phi_P$ signal on mode control line MCL is a ZERO, the input signal $x_i$ induces a total change in charge on the capacitors $DC_{i,j}$ and $DC_{(i+M),j}$ proportional to the difference in their respective capacitances. The resulting displacement current flow from the inverting input terminal of differential-input amplifier $DA_j$ requires that there be a corresponding displacement current flow from the integrating capacitor $CI_j$ charging that capacitor to place thereon a voltage $v_j$ defined as follows.

$$v_j = (CI_j)^{-1} \sum_{i=1}^{M} (C_{i,j} - C_{(i+M),j}) \, x_i$$

$$(13)$$

The voltage $V_j$ is supplied to a non-linear voltage amplifier circuit $NL_j$, which can be the non-linear voltage amplifier circuit of FIGURE 3 or an alternative circuit as previously described. The non-linear voltage amplifier circuit responds to generate the axon output response $y_j$.

From time to time, the normal operation of the neural net is interrupted, and to implement dc-restoration a reset pulse $\phi_R$ is supplied to each charge sensing amplifier $QS_j$. Responsive to $\overline{\phi_R}$ the logic complement of the reset pulse $\phi_R$, going low when $\phi_R$ goes high, transmission gate $TG_j$ is no longer rendered conductive to connect the integrating capacitor $CI_j$ from the output terminal of differential amplifier $DA_j$. Instead, a transmission gate $TG_{(j+N)}$ responds to $\phi_R$ going high to connect to $V_{BIAS}$ the plate of capacitor $C_j$ normally connected from that output terminal, $V_{BIAS}$ being the 2.5 volt intermediate potential between the $V_{SS} = 0$ volt and $V_{DD} = 5$ volt operating voltages of differential amplifier DAj. Another transmission gate $TG_{(j+2N)}$ responds to $\phi_R$ going high to apply direct-coupled feedback from the output terminal of differential amplifier $DA_j$ to its inverting input terminal, to bring the voltage at the output terminal to that supplied to its inverting input terminal from output line $OL_j$. During the dc-restoration all $x_i$ are "zero-valued". So, the charge on integrating capacitor $CI_j$ is adjusted to compensate for any direct voltage error occurring in the circuitry up to the output terminal of differential amplifier $DA_j$. DC-restoration is done concurrently for all differential amplifiers $DA_j$ (i.e., for values of j ranging from one to N).

During training, the $\phi_P$ signal applied to mode control line MCL is a logic ONE, which causes the output line multiplexer $OLM_j$ to disconnect the output line $OL_j$ from the inverting input terminal of differential amplifier $DA_j$ and to connect the output line $OL_j$ to receive a $\delta_j$ error term. This $\delta_j$ error term is generated as the product output signal of a analog multiplier $AM_j$, responsive to a signal $\Delta_j$ and to a signal $y'_j$ which is the change in output voltage $y_j$ of nonlinear amplifier $NL_j$ for unit change in the voltage on output line $OL_j$. The term $\Delta_j$ is for the output neural net layer the difference between $y_j$ actual value and its desired value $d_j$. The term $\Delta_j$ is for a hidden neural net layer the $\Delta_j$ output of the succeeding neural net layer during the back-propagation procedure.

As was the case in the FIGURE 4 neural net layer in the FIGURE 14 neural net layer differentiator $DF_j$ generates the signal $y'_j$, which is a derivative indicative of the slope of $y_j$ change in voltage on output line $OL_j$, superposed on $V_{BIAS}$. To determine the $y'_j$ derivative, a pulse doublet comprising a small positive-going pulse immediately followed by a similar-amplitude negative-going pulse is introduced at the inverting input terminal of differential amplifier $DA_j$ (or equivalently, the opposite-polarity doublet pulse is introduced at the non-inverting input terminal of differential amplifier $DA_j$) to first lower $y_j$ slightly below normal value and then raise it slightly above normal value. This transition of $y_j$ from slightly below normal value to slightly above normal value is applied via a differentiating capacitor $CD_j$ to differentiator $DF_j$.

During training, the $\phi_P$ signal applied to the mode control line MCL is a ONE, as previously noted, and this causes the input line multiplexers $ILM_i$ and $ILM_{(I+M)}$ to disconnect the input lines $IL_i$ and $IL_{(I+M)}$ from the input driver amplifier $ID_i$ output terminals and connect them instead to the non-inverting and inverting input terminals of a differential charge-sensing amplifier $DQS_i$. The voltage $\delta_j$ induces a differential change in charge between input lines $IL_j$ and $IL_{(I+M)}$ proportional to $\delta_j$ $(C_{I,j} - C_{(I+M),j})$, which differential change in charge is sensed using the differential charge sensing amplifier $DQS_i$.

Differential charge-sensing amplifier $DQS_i$ includes a fully differential amplifier (as shown in FIGURE 2, for example) provided with integrating capacitors $IC_i$ and $IC_{(I+M)}$ in respective degenerative feedback connections from each of its output terminals to each of its input terminals. Resetting of differential charge-sensing amplifier $DQS_i$ is similar to the resetting of a single-ended amplifier such as $QS_j$, except for involving two integrating capacitors $IC_i$ and $IC_{(I+m)}$, rather than just the one integrating capacitor $CI_j$. Resetting of differential charge-sensing amplifier $DQS_i$ is done responsive to a pulse $\phi_U$, which occurs during the time when mode control line MCL has a ONE thereon conditioning input line multiplexers $ILM_i$ and $IM_{(I+m)}$ to connect input lines $IL_i$ and $IL_{(I+m)}$ to the differential charge-sensing amplifier $DQS_i$. Resetting is normally done shortly after a ZERO to ONE transition appears in the $\phi_P$ signal applied to mode control line MCL and may also be done at other times. This procedure corrects for capacitive unbalances on the input lines $IL_i$ and $IL_{(I+M)}$ during back-propagation computations that follow the resetting procedure. In these computations voltages $+\Delta_i + V_{BIAS}$ and $-\Delta_i V_{BIAS}$ are developed at the (+) and (-) output terminals of the fully differential amplifier included in differential charge-sensing amplifier $DQS_i$. The voltage $+\Delta_i + V_{BIAS}$ is used by the preceding neural net layer during the back-propagation training procedure, if such a preceding neural net layer exists. The use of single-ended $+\Delta_i$ and $+\Delta_j$ drive is shown in FIGURE 14, presuming the neural net layers to be integrated within separate monolithic integrated circuits, and presuming the limitation on number of pin-outs is restrictive. Where a plurality of neural net layers are integrated within the same monolithic integrated circuitry, or where maximum pin-out count is not a restrictive design factor, balanced $\Delta$ signals may be applied from one neural net layer to the preceding one. So, too, if the non-linear voltage amplifier $NL_j$ is of a correct type (for example, a long-tailed pair connection of transistors) $Y_j + V_{BIAS}$ and $-y_j + V_{BIAS}$ balanced output signals may be supplied to the next neural net layer. Indeed, the $y'_j$ signals applied to the analog multiplier $AM_j$ may be generated in balanced form, re-

EP 0 428 716 B1

placing differentiator $DF_j$ and sample-and-hold circuit $SH_j$ with balanced circuitry.

FIGURE 5 shows how each output line $OL_j$ for j = 1, ...N may be pulsed during calculation of $y'_j$ terms. Each output line $OL_j$ is connected by a respective capacitor $CO_j$ to the outpu- terminal of a pulse generator PG, which generates the doublet pulse. FIGURE 5 shows the doublet pulse applied to the end of each output line $OL_j$ remote from the - terminal of the associated differential amplifier $DA_j$ in the charge-sensing amplifier $QS_j$ sensing the charge on that line. It is also possible to apply the doublet pulses more directly to those (-) terminals by connecting to these terminals respective ones of the plates of capacitors $CO_j$ that are remote from the plates connecting to pulse generator PG.

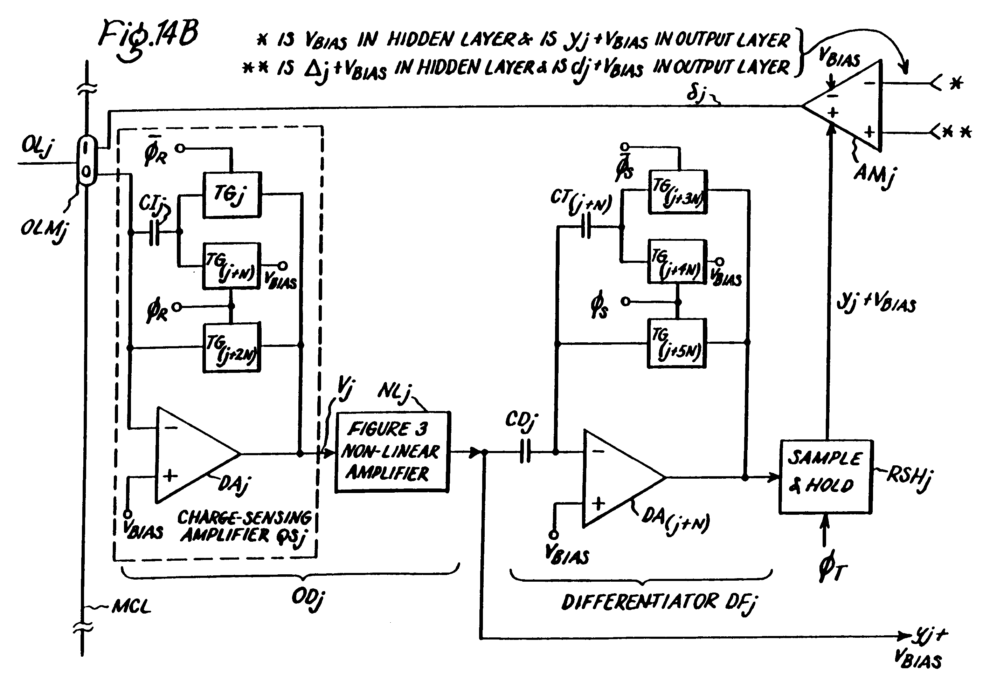

FIGURE 15 shows how the non-inverting (+) input terminal of each differential amplifier $DA_j$ may be pulsed during calculation of $y'_j$ terms, rather than pulsing the $OL_j$ output lines. $V_{BIAS}$, rather than being applied directly to the non-inverting input terminals of each differential amplifier $DA_j$, is applied from the output terminal of a biasing operational amplifier BOA. Operational amplifier BOA has its non-inverting terminal connected to receive $V_{BIAS}$, and has degenerative feedback applied via a resistor $R_1$ from its output terminal to its inverting input terminal. This degenerative feed holds the quiescent level of operational amplifier BOA output terminal at $V_{BIAS}$. A pulse generator PG applies a doublet pulse via the series connection of a resistor R2 having resistance and a dc-blocking capacitor CB to the inverting input terminal of operational amplifier BOA. Presuming the resistances of resistors R1 and R2 to be $R_1$ and $R_2$, respectively, a doublet pulse $-R_1/R_2$ times the amplitude of the doublet pulse supplied from the pulse generator PG is applied from the output terminal of operational amplifier DBA to the non-inverting input terminals of differential amplifiers $DA_j$. This doublet pulse, having no direct voltage component, does not alter the $V_{BIAS}$ direct component maintained at the output terminal of operational amplifier BOA by the degenerative feedback connection back to the inverting input connection of BOA.

Arrangements for adding the doublet pulse to $v_j$ before its application to the non-linear amplifier $NL_j$ can be used, rather than using the FIGURE 5 or FIGURE 15 arrangement.

The FIGURE 7 apparatuses for completing the back-propagation computations can also be used with the FIGURE 13 neural net layers manifoldly modified per FIGURE 14. In FIGURE 8 the trained neural net layers $L_0$, $L_1$ and $L_2$ may alternatively be constructed using FIGURE 13 neural net layers manifoldly modified per FIGURE 14.

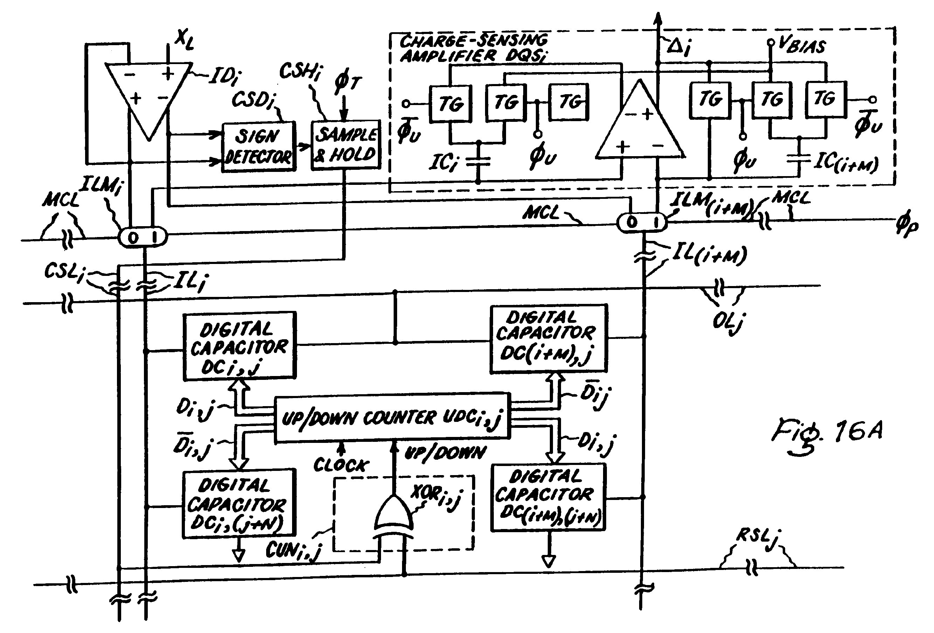

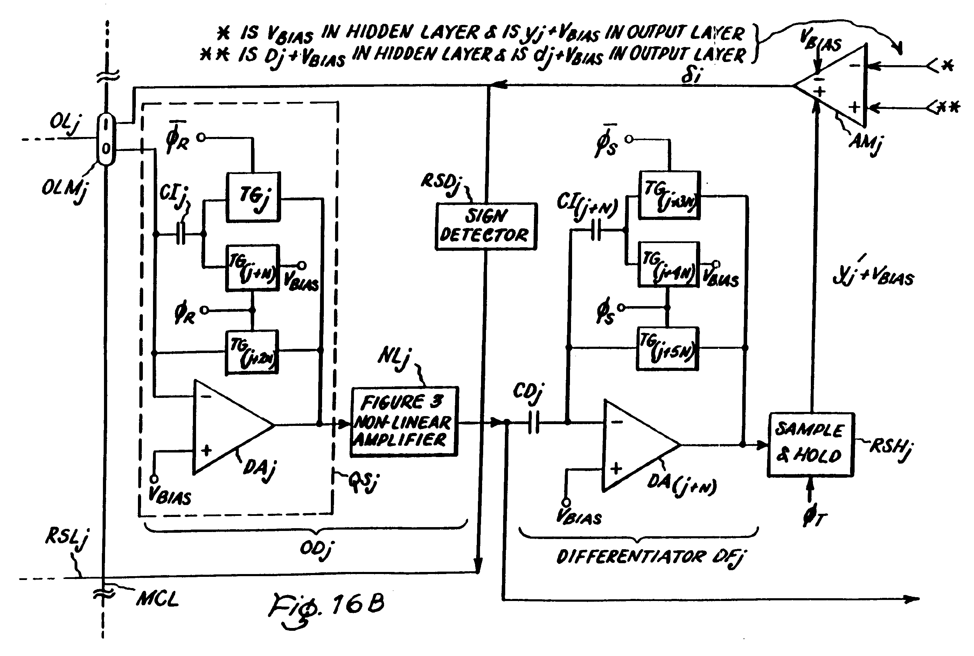

FIGURE 16, comprising component FIGURES 16A and 16B shows an alternative modification that can be manifoldly made to the FIGURE 13 neural net layer to give it training capability. This alternative modification seeks to avoid the need for a high-resolution multiplier MULT and complex addressing during back-propagation calculations in order that training can be implemented. A respective up/down counter $UDC_{i,j}$ is used instead of each word storage element $WSE_{i,j}$. Correction of the word stored in counter $UDC_{i,j}$ is done a count at a time; and the counter preferably has at least one higher resolution stage in addition to those used to control the capacitances of digital capacitors $DC_{i,j}$, $DC_{(i+M),j}$, $DC_{i,(j+N)}$ and $DC_{(i+M),(j+N)}$ Each up/down counter $UDC_{i,j}$ has a respective counter control circuit $CON_{i,j}$ associated therewith. Each counter control circuit $CON_{i,j}$ may, as shown in FIGURE 16A, and described in detail further on in this specification simply consist of an exclusive-OR gate $XOR_{i,j}$.

A row sign detector $RSD_j$ detects whether the polarity of $\delta_j$ is positive or negative, indicative of whether a row of weights should in general be decremented or incremented, and broadcasts its detection result via a row sign line $RSL_j$ to all counter control circuits ($CON_{i,j}$ for i=1, ...,M) in the row j associated with that row sign detector $RSD_j$. Before making a back-propagation calculation, a respective column sign detector $CSD_i$ detects whether the polarity of $x_i$ is positive or negative for each columnar position along the row which is to be updated, to provide an indication of whether it is likely the associated weight should be decremented or incremented. This indication is stored temporarily in a (column) sample and hold circuit $CSH_i$. Each column sample and hold circuit $CSH_i$ is connected to broadcast its estimate via a column sign line $CSL_i$ to all counter control circuits ($CON_{i,j}$ for j=1, ...N) in the column i associated with that sample and hold circuit $CSH_i$. Responsive to these indications from sign detectors $CSD_i$ and $RSD_j$, each respective counter control circuit $CON_{i,j}$ decides in which direction up/down counter $UDC_{i,j}$ will count to adjust the weight control signals $D_{i,j}$ and $\overline{D}_{i,j}$ stored therein

The counter control circuitry $CON_{i,j}$ should respond to the sign of $+\delta_j$ being positive, indicating the response $v_j$ to be too positive, to decrease the capacitance to output line $OL_j$ that is associated with the signal $x_i$ or $-x_i$ that is positive and to increase the capacitance to output line $OL_j$ that is associated with the signal $-x_i$ or $x_i$ that is negative, for each value of i. The counter control circuitry $CON_{i,j}$ should respond to the sign of $+\delta_j$ being negative, indicating the response v to be too negative, to increase the capacitance to output line $OL_j$ that is associated with the signal $-x_i$ or $x_i$ that is negative and to decrease the capacitance to output line $OL_j$ that is associated with the signal $x_i$ or $-x_i$ that is positive. Accordingly, counter control circuitry $CON_{i,j}$ may simply consist of a respective exclusive-OR gate $XOR_{i,j}$ as shown in FIGURE 16A, if the following presumptions are valid.

Each of the digital capacitors $DC_{i,j}$ and $DC_{(i+M),(j+N)}$ is presumed to increase or decrease its capacitance as

17

EP 0 428 716 B1

$D_{i,j}$ is increased or decreased respectively. Each of the digital capacitors $DC_{(i+M),j}$ and $DC_{i,(i+N)}$ is presumed to increase or decrease its capacitance as $\overline{D}_{i,j}$ is increased or decreased respectively. A ZERO applied as up/down signal to up/down counter $UDC_{i,j}$ is presumed to cause counting down for $D_{i,j}$ and counting up for $\overline{D}_{i,j}$. A ONE applied as up/down signal to up/down counter $UDC_{i,j}$ is presumed to cause counting up for $D_{i,j}$ and counting down for $\overline{D}_{i,j}$. Column sign detector $CSD_i$ output indication is presumed to be a ZERO when $x_i$ is not negative and to be a ONE when $x_i$ is negative. Row sign detector $RSD_j$ output indication is presumed to be a ZERO when $\delta_j$ is not negative and to be a ONE when $\delta_j$ is negative. Since the condition where $x_i$ or $\delta_j$ is zero-valued is treated as if the zero-valued number were positive, forcing a false correction which is in fact not necessary, and thus usually creating the need for a counter correction in the next cycle of back-propagation training, there is dither in the correction loops. However, the extra stage or stages of resolution in each up/down counter $UDC_{i,j}$ prevent high-resolution dither in the feedback correction loop affecting the capacitances of $DC_{i,j}$ , $DC_{(i+M),j}$, $DC_{i,(j+N)}$ and $DC_{(i+M),(j+N)}$.

Analog multiplier $AM_j$ can be readily modified to develop its product output in balanced form. The Bult and Wallinga analog multiplier initially develops its product in balanced form and follows this with a push-pull to single-ended converter connection using current mirror multipliers. An additional balanced to single-ended converter can convert the push-pull product to opposite-sense output signal. With an analog multiplier generating balanced product signals, the $+\delta_j$ and $-\delta_j$ terms can be supplied to a voltage comparator that serves as the row sign detector $RSD_j$. Alternatively, since the derivative $y'_j$ always has the same sign (normally a positive one), one can use a voltage comparator to compare the voltages supplied to the asterisked and double-asterisked input terminals of the analog multiplier $AM_j$, for providing the row sign detector $RSD_j$.

A further modification in accordance with FIGURE 12C can be made to the FIGURE 13 neural net layer modified per FIGURE 16. Input driver amplifier $ID_i$ is time-division-multiplexed in duplex circuitry $DPX_i$ for performing the function of the differential charge-sensing amplifier DQS in FIGURE 16A. Only one set of interconnecting lines is used between neural net layers, both for conducting $x_i + V_{BIAS}$ signals to a neural net layer during forward-propagation when $\phi_P$ is ZERO and for conducting $\Delta_i + V_{BIAS}$ signals from that neural net layer during back-propagation when $\phi_P$ is ONE. An input multiplexer $IMI_i$ controlled from the $\phi_P$, which is signal on the mode control line MCL, performs the time-division-multiplexing for the neural net layer including input driver amplifier $ID_i$. An output multiplexer $OM_i$ for the preceding neural net layer controlled from the $\phi_P$ signal in its mode controlling MCL' selects $y_i + V_{BIAS}$ to the interconnecting line between the layers during forward propagation when $\phi_P$ is ZERO, and selects $\Delta_i + V_{BIAS}$ from that interconnecting line during back-propagation when $\phi_P$ is ONE.

Similar further modification can be made to the FIGURE 13 neural net layer modified per FIGURE 14. In such case column sign detector $CSD_i$ column sample and hold circuit $CSH_i$, and column sign line $CSL_i$ would, of course, not be used.

The time-division-multiplexed use of the input driver amplifiers $ID_i$ saves integrated-circuit die area. The conservation of interconnecting lines between successive neural net layers is of substantial importance, since pin-out limitations on interconnected integrated circuits having different neural net layers therein are less restrictive of neural net layer size. A neural net layer with twice as many inputs and outputs can be constructed within an integrated circuit having given pin-out limitations.

The multiplexers employed in various portions of the circuits described above are customarily constructed of single-pole switch elements, each of which single-pole switch elements is conventionally a so-called "transmission gate" connection of one or more field effect transistors in CMOS design. A suitable transmission gate is provided by the paralleled channels of a p-channel FET and an n-channel FET having oppositely swinging control voltages applied to their respective gate electrodes to control the selective conduction of those paralleled channels.

## Claims

1. A processor for providing an axon-response to a plurality M in number of input voltage signals ($X_1...X_M$) identified by respective ones of the consecutive ordinal numbers first through Mth; said processor having a first plurality M in number of weighting capacitance elements ($C_{ij}$) identified by respective ones of the consecutive ordinal numbers first through Mth each charged in response to an input signal voltage identified by the corresponding ordinal number; a charge sensing circuit ($QS_j$, $DQS_j$) connected to said capacitive elements for sensing the combined charge on said first through Mth weighting capacitance elements to generate a weighted summation response; a non-linear amplifier (NL) connected to said charge sensing circuit to provide a response responsive to the weighted summation response; said processor being characterized by a second plurality M in number of weighting capacitance elements ($C_{i,j + N}$) identified

18

by respective ones of the consecutive ordinal number $(M+1)^{th}$ through $2M^{th}$ each charged in response to an input signal voltage identified by the ordinal number lower by M or to the negative value of that input signal voltage; said charge sensing circuit connected to said second plurality of capacitive elements for sensing the combined charge on said $(M+1)^{th}$ through $2M^{th}$ weighting capacitance elements as well as the combined charge on said first through $M^{th}$ weighting capacitance elements to generate the weighted summation response, the sensing of the combined charge on said $(M+1)^{th}$ through $2M^{th}$ weighting capacitance elements and of the combined charge on said first through $M^{th}$ weighting capacitance elements being done by sensing the difference in charge between the two pluralities in the case where the $(M+1)^{th}$ through $2M^{th}$ weighting capacitance elements are charged by the negative values of the input signal voltages and being done by sensing the sum of the charges of the two pluralities where the $(M+1)^{th}$ through $2M^{th}$ weighting capacitance elements are charged by the input signal voltages rather than their negative values.

2. A processor as set forth in claim 1 CHARACTERIZED BY being included as one of a plurality N in number of such processors ($L_0$, $L_1$, $L_2$) respectively identified by respective consecutive ordinal numbers first through $N^{th}$ which receive the same set of input signals, thereby forming a neural net layer including said first through $N^{th}$ processors.

3. A processor as set forth in claim 2 CHARACTERIZED BY being included in a neural net layer that receives the same set of input signals from another neural net layer.

4. A processor as set forth in claim 2 CHARACTERIZED BY being included in a neural net layer that supplies its M axon-responses as a set of input signals to another neural net layer.

5. A processor as set forth in any of claims 1, 2, 3 or 4 CHARACTERIZED BY each of said weighting capacitance elements being a respective digital capacitor (DC) of the same type as each of the capacitive elements, each of which digital capacitors has a capacitance that is programmed by a respective binary number programming signal.

6. A processor as set forth in claim 5 CHARACTERIZED BY a respective binary counter (UDC) for each pair of digital capacitors providing ones of said weighting capacitance elements having respective ordinal numbers that differ by M, which respective binary counter supplies its corresponding digital capacitors their binary number programming signals; and circuitry (CON) for selectively incrementing or decrementing the count in each respective binary counter.

7. A processor as set forth in claim 5 CHARACTERIZED BY a respective memory array IMA for binary numbers having a respective word storage element for each pair of digital capacitors providing ones of said weighting capacitance elements having respective ordinal numbers that differ by M, which respective word storage element supplies its corresponding digital capacitors their binary number programming signals.

8. A processor as set forth in claim 3 or 4 CHARACTERIZED BY each of said weighting capacitance elements being a respective digital capacitor (DC) of the same type as each of the other capacitive elements, each of which digital capacitors has a capacitance that is programmed by a respective binary number programming signal; a respective binary counter (UDC) for each pair of digital capacitors providing ones of said weighting capacitance elements having respective ordinal numbers that differ by M, which respective binary counter supplies its corresponding digital capacitors their binary number programming signals; and circuitry CON for selectively incrementing or decrementing the count in each respective binary counter in accordance with back propagation calculations made using said first and second pluralities of weighting capacitance elements for carrying out analog computation.

9. A processor as set forth in claim 3 or 4 CHARACTERIZED BY each of said weighting capacitance elements being a respective digital capacitor of the same type as each of the other capacitive elements, each of which digital capacitors has a capacitance that is programmed by a respective binary number programming signal; a respective memory array (IMA) for binary numbers having a respective word storage element (WSE) for each pair of digital capacitors providing ones of said weighting capacitance elements having respective ordinal numbers that differ by M, which respective word storage element supplies its corresponding digital capacitors their binary number programming signals; and circuitry (CON) for selectively incrementing or decrementing the binary number stored in each respective word storage element in accordance with back propagation calculations made using said first and second pluralities of weighting capacitance elements for carrying out analog computation.

**Patentansprüche**

1. Prozessor zur Lieferung einer Axon-Antwort auf eine Anzahl M von Eingangssignalspannungen (X1....XM), die durch entsprechende aufeinanderfolgende erste bis M-te Ordnungszahlen identifiziert sind; wobei der Prozessor eine erste Anzahl M von gewichtenden Kapazitätselementen (Cij) aufweist, die durch entsprechende aufeinanderfolgende erste bis M-te Ordnungszahlen identifiziert sind und die jeweils bei einer Eingangssignalspannung geladen werden, die durch die entsprechende Ordnungszahl identifiziert ist, eine Ladungsabtastschaltung (QSj, DQSj), die mit den kapazitiven Elementen verbunden ist, zum Abtasten der kombinierten Ladung der ersten bis M-ten gewichtenden Kapazitätselemente, um eine gewichtete Summationsantwort zu generieren; einen nicht-linearen Verstärker (NL), der mit der Ladungsabtastschaltung verbunden ist, um bei der gewichteten Summationsantwort eine Antwort zu liefern; wobei der Prozessor gekennzeichnet ist durch eine zweite Anzahl M von gewichtenden Kapazitätselementen (Ci,j+N), die durch entsprechende der aufeinanderfolgenden Ordnungszahlen (M+1)-ten bis 2M-ten identifiziert sind, die jeweils als Antwort auf eine Eingangssignalspannung, die durch die Ordnungszahl kleiner um M oder auf den negativen Wert dieser Eingangssignalspannung geladen werden; wobei die Ladungsabtastschaltung mit der zweiten Anzahl von kapazitiven Elementen verbunden ist zum Abtasten der kombinierten Ladung auf den (M+1)-ten bis 2M-ten gewichtenden Kapazitätselementen und auch der kombinierten Ladung auf den ersten bis M-ten gewichtenden Kapazitätselementen, um die gewichtete Summationsantwort zu generieren, wobei die Abtastung der kombinierten Ladung auf den (M+1)-ten bis 2M-ten gewichtenden Kapazitätselementen und der kombinierten Ladung auf den ersten bis M-ten gewichtenden Kapazitätselementen erfolgt durch Abtasten der Ladungsdifferenz zwischen den zwei Anzahlen in dem Fall, wo die (M+1)-ten bis 2M-ten gewichtenden Kapazitätselemente durch die negativen Werte der Eingangssignalspannungen geladen werden, und durch Abtasten der Summe der Ladungen der zwei Anzahlen erfolgt, wo die (M+1)-ten bis 2M-ten gewichtenden Kapazitätselemente durch die Eingangssignalspannungen anstatt ihrer Werte geladen werden.

2. Prozessor nach Anspruch 1, dadurch gekennzeichnet, daß er als einer von einer Anzahl N derartiger Prozessoren (L0, L1, L2) enthalten ist, die auf entsprechende Weise durch auf entsprechende aufeinanderfolgende erste bis Nte Ordnungszahlen identifiziert sind, die den gleichen Satz von Eingangssignalen empfangen, um dadurch eine neuronale Netzschicht zu bilden, die erste bis Nte Prozessoren enthält.

3. Prozessor nach Anspruch 2, dadurch gekennzeichnet, daß er in einer neuronalen Netzschicht enthalten ist, die den gleichen Satz von Eingangssignalen von einer anderen neuronalen Netzschicht empfängt.

4. Prozessor nach Anspruch 2, dadurch gekennzeichnet, daß er in einer neuronalen Netzschicht enthalten ist, die ihre M-Axon-Antworten als einen Satz von Eingangssignalen an eine andere neuronale Netzschicht liefert.

5. Prozessor nach einem der Ansprüche 1, 2, 3 oder 4, dadurch gekennzeichnet, daß jedes der gewichtenden Kapazitätselemente ein entsprechender digitaler Kondensator (DC) des gleichen Typs wie jedes der kapazitivrn Elemente ist, wobei jeder digitale Kondensator eine Kapazität hat, die durch ein entsprechendes Binärzahlen-Programmierungssignal programmiert ist.

6. Prozessor nach Anspruch 5, gekennzeichnet durch einen entsprechenden binären Zähler (UDC) für jedes Paar digitaler Kondensatoren, die eines der gewichtenden Kapazitätselemente mit entsprechenden Ordnungszahlen liefern, die sich um M unterscheiden, wobei der entsprechende binäre Zähler seinen entsprechenden digitalen Kondensatoren ihre Binärzahlen-Programmierungssignale zuführt; und eine Schaltungsanordnung (CON) zum selektiven Inkrementieren oder Dekrementieren des Zählwertes in jedem entsprechenden binären Zähler.

7. Prozessor nach Anspruch 5, gekennzeichnet durch ein entsprechendes Speicherfeld (IMA) für Binärzahlen mit einem entsprechenden Wortspeicherelement für jedes Paar digitaler Kondensatoren, die eines der gewichtenden Kapazitätselemente mit entsprechenden Ordnungszahlen liefern, die sich um M unterscheiden, wobei das entsprechende Wortspeicherelement seinen entsprechenden digitalen Kondensatoren ihre Binärzahlen-Programmierungssignale liefert.

8. Prozessor nach Anspruch 3 oder 4, dadurch gekennzeichnet, daß jedes der gewichtenden Kapazitätselemente ein entsprechender digitaler Kondensator (DC) des gleichen Typs wie jedes der anderen kapazitiven Elemente ist, wobei jeder digitale Kondensator eine Kapazität hat, die durch ein entsprechendes Binärzahlen-Programmierungssignal programmiert ist; ein entsprechender binärer Zähler (UDC) für jedes Paar digitaler Kondensatoren eines der gewichtenden Kapazitätselemente mit entsprechenden Ordnungszahlen liefert, die sich um M unterscheiden, wobei der entsprechende binäre Zähler seinen entsprechenden digitalen Kondensatoren deren Binärzahlen-Programmierungssignale liefert; und eine Schaltungsanordnung (CON) zum selektiven Inkrementieren oder Dekrementieren des Zählwertes in jedem entsprechenden binären Zähler gemäß Rückausbreitungs-Berechnungen, die unter Verwendung erster und zweiter Anzahlen von gewichtenden Kapazitätselementen zum Ausführen einer analogen Berechnung durchgeführt werden.

9. Prozessor nach Anspruch 3 oder 4, dadurch gekennzeichnet, daß jedes der gewichtenden Kapazitätselemente ein entsprechender digitaler Kondensator des gleichen Typs ist wie die anderen kapazitiven Elemente, wobei jeder der digitalen Kondensatoren eine Kapazität hat, die durch ein entsprechendes Binärzahlen-Programmierungssignal programmiert ist; ein entsprechendes Speicherfeld (IMA) für Binärzahlen ein entsprechendes Wortspeicherelement (WSE) für jedes Paar digitaler Kondensatoren hat, die eines der gewichtenden Kapazitätselemente mit entsprechenden Ordnungszahlen bilden, die sich um M unterscheiden, wobei das entsprechende Wortspeicherelement seinen entsprechenden digitalen Kondensatoren deren Binärzahlen-Programmierungssignale zuführt; und eine Schaltungsanordnung (CON) zum selektiven Inkrementieren oder Dekrementieren der Binärzahl, die in jedem entsprechenden Wortspeicherelement gespeichert ist, gemäß Rückausbreitungs-Berechnungen, die unter Verwendung der ersten und zweiten Anzahlen von gewichtenden Kapazitätselementen gemacht sind zum Ausführen einer analogen Berechnung.

## Revendications

1. Processeur pour fournir une réponse d'axones à une pluralité, en nombre M, de signaux ($X_1$.....$X_M$) de tension d'entrée, identifiés par des nombres ordinaux consécutifs respectifs, allant du premier au $M^{ième}$; ledit processeur comportant une première pluralité, en nombre M, d'éléments capacitifs de pondération ($C_{ij}$) identifiés par des nombres ordinaux consécutifs respectifs allant du premier au $M^{ième}$, chargés chacun en réponse à une tension de signal d'entrée identifiée par le nombre ordinal correspondant; un circuit ($QS_j$, $DQS_j$) de détection de charge connecté auxdits éléments capacitifs pour détecter la charge combinée présente sur lesdits premier à $M^{ième}$ éléments capacitifs de pondération pour générer une réponse de sommation pondérée; un amplificateur non linéaire (NL) connecté audit circuit de détection de charge pour fournir une réponse asservie à la réponse de sommation pondérée; ledit processeur étant caractérisé par une seconde pluralité, en nombre M, d'éléments capacitifs de pondération ($C_{i,\ j+N}$) identifiés par des nombres ordinaux consécutifs respectifs allant du $(M+1)^{ième}$ au $2M^{ième}$, chargés chacun en réponse à une tension de signal d'entrée identifiée par le nombre ordinal correspondant abaissé de M ou à la valeur négative de cette tension de signal d'entrée; ledit circuit de détection de charge connecté à ladite seconde pluralité d'éléments capacitifs pour détecter la charge combinée présente sur lesdits $(M+1)^{ième}$ à $2M^{ième}$ éléments capacitifs de pondération ainsi que la charge combinée présente sur lesdits premier à $M^{ième}$ éléments capacitifs de pondération pour générer la réponse de sommation pondérée, la détection de la charge combinée présente sur lesdits $(M+1)^{ième}$ à $2M^{ième}$ éléments capacitifs de pondération et de la charge combinée présente sur lesdits premier à $M^{ième}$ éléments capacitifs de pondération étant effectuée par détection de la différence de charge entre les deux pluralités dans le cas où les $(M+1)^{ième}$ à $2M^{ième}$ éléments capacitifs de pondération sont chargés par les valeurs négatives des tensions de signaux d'entrée et étant effectuée par détection de la somme des charges des deux pluralités où les $(M+1)^{ième}$ à $2M^{ième}$ éléments capacitifs de pondération sont chargés par les tensions de signaux d'entrée et non pas par leurs valeurs négatives.

2. Processeur selon la revendication 1, caractérisé par le fait qu'il est inclus en tant que processeur d'une pluralité, en nombre N, de tels processeurs ($L_0$, $L_1$, $L_2$) identifiés, respectivement, par des nombres ordinaux consécutifs respectifs, allant d'un premier à N$^{ième}$, qui reçoivent le même ensemble de signaux d'entrée, en formant de cette manière une couche de réseaux neuronaux comprenant lesdits premier à N$^{ième}$ processeurs.

3. Processeur selon la revendication 2, caractérisé par le fait qu'il est inclus dans une couche de réseaux neuronaux qui reçoivent le même ensemble de signaux d'entrée d'une autre couche de réseaux neuronaux.

4. Processeur selon la revendication 2, caractérisé par le fait qu'il est inclus dans une couche de réseaux neuronaux qui fournit ses M réponses d'axones sous forme d'un ensemble de signaux d'entrée à une autre couche de réseaux neuronaux.

5. Processeur selon l'une quelconque des revendications 1, 2, 3 ou 4, caractérisé par le fait que chacun desdits éléments capacitifs de pondération est un condensateur numérique respectif (DC) du même type que celui de chacun des éléments capacitifs, chacun de ces condensateurs ayant une capacité qui est programmée par un signal respectif de programmation de nombres binaires.

6. Processeur selon la revendication 5, caractérisé par un compteur binaire respectif (UDC) pour chaque paire de condensateurs numériques constituant ceux desdits éléments capacitifs de pondération dont les nombres ordinaux respectifs présentent une différence de M, ce compteur binaire respectif fournissant à ses condensateurs numériques correspondants leurs signaux de programmation de nombres binaires; et un circuit (CON) pour incrémenter ou décrémenter sélectivement le compte présent dans chaque compteur binaire respectif.

7. Processeur selon la revendication 5, caractérisé par une matrice respective (IMA) de mémoires pour nombres binaires comportant un élément respectif de stockage de mots pour chaque paire de condensateurs numériques constituant ceux des éléments capacitifs de pondération dont les nombres ordinaux respectifs présentent une différence de M, cet élément respectif de stockage de mots fournissant à ses condensateurs numériques correspondants leurs signaux de programmation de nombres binaires.

8. Processeur selon la revendication 3 ou 4, caractérisé par le fait que chacun des éléments capacitifs de pondération est un condensateur numérique respectif (DC) du même type que celui de chacun des autres éléments capacitifs, chacun de ces condensateurs numériques ayant une capacité qui est programmée par un signal respectif de programmation de nombres binaires; un compteur binaire respectif (UDC) pour chaque paire de condensateurs numériques constituant ceux desdits éléments capacitifs de pondération dont les nombres ordinaux respectifs présentent une différence de M, ce compteur binaire respectif fournissant à ses condensateurs numériques correspondants leurs signaux de programmation de nombres binaires; et un circuit (CON) pour incrémenter ou décrémenter sélectivement le compte contenu dans chaque compteur binaire respectif en fonction de calculs en rétropropagation, effectués en utilisant lesdites première et seconde pluralités d'éléments capacitifs de pondération pour exécuter le calcul analogique.

9. Processeur selon la revendication 3 ou 4, caractérisé par le fait que chacun desdits éléments capacitifs de pondération est un condensateur numérique respectif du même type que celui de chacun des autres éléments capacitifs, chacun de ces condensateurs numériques ayant une capacité qui est programmée par un signal respectif de programmation de nombres binaires; une matrice respective (IMA) de mémoires pour nombres binaires ayant un élément respectif ((WSE) de stockage de mots pour chaque paire de condensateurs numériques constituant ceux des éléments capacitifs de pondération dont les nombres ordinaux respectifs présentent une différence de M, cet élément respectif de stockage de mots fournissant à ses condensateurs numériques correspondants leurs signaux de programmation de nombres binaires; et un circuit (CON) pour incrémenter ou décrémenter sélectivement le nombre binaire stocké dans chaque élément respectif de stockage de mots en fonction de calculs en rétro-propagation effectués par utilisation desdites première et seconde pluralités d'éléments capacitifs de pondération pour exécuter un calcul analogique.

# Fig.1

Fig.2
PRIOR ART

FULLY DIFFERENTIAL AMPLIFIER

BIAS NETWORK

24

Fig.3

$V_{DD} = +5.0\,V$

$Q_{23}$

$Q_{24}$

$V_{HI} = +2.1V$

$Q_{26}$

IN

$Q_{20A}$

OUT

2.5V

$Q_{20B}$

$Q_{25}$

$V_{LO} = +1.4V$

$Q_{21}$

$Q_{22}$

$V_{SS} = OV$

NON-LINEAR VOLTAGE FOLLOWER    BIAS NETWORK

Fig. 4A

Fig. 4B

EP 0 428 716 B1

Fig. 5.

Fig. 15

28

Fig.6

EP 0 428 716 B1

Fig.7

$X_1$
$X_2$
$X_{(M-1)}$
$X_M$

MUX

CM

RM

$\delta_1$
$\delta_2$
$\delta_{(N-1)}$
$\delta_N$

MUX

MULT

ANALOG-INPUTS
DIGITAL OUTPUT
MULTIPLIER

$\eta x_i \delta_j$

SUB

$\Sigma$

WRITE
INPUT

IMA

INTERSTITIAL
MEMORY
ARRAY

READ
OUTPUT

ASG

ADDRESS
SCANNING
GENERATOR

$i$ ADDRESS

$j$ ADDRESS

TEMPORARY
STORAGE

TS

EP 0 428 716 B1

Fig. 8

EP 0 428 716 B1

Fig. 9A

Fig. 9B

EP 0 428 716 B1

EP 0 428 716 B1

Fig.10

Fig.11

Fig. 12A

$+\delta_j$

DIFFERENTIAL CHARGE SENSING AMPLIFIER

$\delta_j$ SIGN

$CSL_i$   $IL_i$

$IL_{(i+M)}$

$MCL$

$RSL_j$

$DDS_j$   $TG_j$

$\bar{\phi}_R$

$OL_j$

$CL_j$

$OL_j$

$TG_{(j+N)}$

$OLM_j$

DIGITAL CAPACITOR $DC_{i,j}$

DIGITAL CAPACITOR $DC_{(i+M),j}$

$\phi_R$

$TG_{(j+2N)}$

$+V_j$   $NL_j$

$CON_{i,j}$   $XOR_{i,j}$

$MCL$

FIGURE 3 NON-LINEAR AMPLIFIER

$Y_i$

UP/DOWN COUNTER $UDC_{i,j}$

$DA_j$

$-V_j$

$TG_{(j+3N)}$

DIGITAL CAPACITOR $DC_{i,(j+N)}$

DIGITAL CAPACITOR $DC_{(i+M),(j+N)}$

$\phi_R$

$TG_{(j+4N)}$

$V_{BIAS}$

$OL_{(j+N)}$

$OLM_{(j+N)}$

$\bar{\phi}_R$

$CL_{(j+N)}$

$TG_{(j+5N)}$

$CSL_i$   $IL_i$

$IL_{(i+M)}$   $MCL$

$OD_j$

$-\delta_j$

EP 0 428 716 B1

Fig. 12B

EP 0 428 716 B1

Fig. 12C

Fig. 13

Fig.14A

Fig.14B

* IS $V_{BIAS}$ IN HIDDEN LAYER & IS $y_j + V_{BIAS}$ IN OUTPUT LAYER
** IS $\Delta_j + V_{BIAS}$ IN HIDDEN LAYER & IS $d_j + V_{BIAS}$ IN OUTPUT LAYER

EP 0 428 716 B1

Fig. 16A

*IS $V_{BIAS}$ IN HIDDEN LAYER & IS $y_j + V_{BIAS}$ IN OUTPUT LAYER

** IS $D_j + V_{BIAS}$ IN HIDDEN LAYER & IS $d_j + V_{BIAS}$ IN OUTPUT LAYER

Fig. 16 B

EP 0 428 716 B1